(19) Europäisches Patentamt
European Patent Office
Office européen des brevets

(11) EP 4 451 434 A1

(12) EUROPEAN PATENT APPLICATION

(43) Date of publication:
**23.10.2024 Bulletin 2024/43**

(21) Application number: **24166290.7**

(22) Date of filing: **26.03.2024**

(51) International Patent Classification (IPC):
***H01M 50/105*** *(2021.01)* ***H01M 50/533*** *(2021.01)*
***H01M 50/534*** *(2021.01)* ***H01M 50/536*** *(2021.01)*

(52) Cooperative Patent Classification (CPC):
**H01M 50/105; H01M 50/533; H01M 50/534; H01M 50/536;** C09J 2203/33

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039382**
**28.08.2023 KR 20230113190**

(71) Applicant: **Samsung SDI Co., Ltd.**
**Yongin-si, Gyeonggi-do 17084 (KR)**

(72) Inventors:
- **SEINO, Hiroshi**
  **17084 Yongin-si, Gyeonggi-do (KR)**
- **AHN, Jeongchull**
  **17084 Yongin-si, Gyeonggi-do (KR)**
- **KIM, Sanghyun**
  **17084 Yongin-si, Gyeonggi-do (KR)**
- **CHA, Jaehyuck**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

# (54) ELECTRODE STRUCTURE AND LITHIUM BATTERY INCLUDING THE SAME

(57) An electrode structure, including an electrode current collector including a coated portion and an uncoated portion; an electrode active material layer on the uncoated portion of the electrode current collector; a first lead electrode on the uncoated portion of the electrode current collector; a second lead electrode attached to the first lead electrode; a first adhesive layer between the first lead electrode and the electrode current collector and attaching the first lead electrode to the electrode current collector; and a second adhesive layer between the first lead electrode and the second lead electrode and attaching the second lead electrode to the first lead electrode, wherein at least one of the first adhesive layer and the second adhesive layer includes an adhesive which includes a binder and conductive particles, the binder including maleimide-modified polyolefin which includes two or more acidic functional groups.

EP 4 451 434 A1

## Description

BACKGROUND

1. Field

One or more embodiments relate to an electrode structure and a lithium battery including the same.

2. Description of the Related Art

In general, a secondary battery is constructed by accommodating a battery structure and an electrolyte in a battery case and installing a cap plate on the battery case. An electrode tab, a cathode terminal, and the like may be connected to the battery structure, and the battery structure may be exposed or protruded to the outside through the cap plate. A battery structure of a secondary battery may be formed in a jelly roll form by winding a stack of a cathode plate, an anode plate, and a separator or may be formed in a stack form by stacking a plurality of cathode plates, a plurality of anode plates, and a plurality of separators. In order to connect an electrode tab to a battery structure, the electrode tab may be welded and electrically connected to the battery structure.

SUMMARY

The invention is defined by the appended claims. The description that follows is subjected to this limitation. Any disclosure lying outside the scope of said claims is only intended for illustrative as well as comparative purposes. The embodiments may be realized by providing.

Embodiments are directed to an electrode structure, including an electrode current collector including a coated portion and an uncoated portion; an electrode active material layer on the coated portion of the electrode current collector; a first lead electrode on the uncoated portion of the electrode current collector; a second lead electrode attached to the first lead electrode; a first adhesive layer between the first lead electrode and the electrode current collector and attaching the first lead electrode to the electrode current collector; and a second adhesive layer between the first lead electrode and the second lead electrode and attaching the second lead electrode to the first lead electrode, wherein at least one of the first adhesive layer and the second adhesive layer includes an adhesive which includes a binder and conductive particles, the binder including maleimide-modified polyolefin which includes two or more acidic functional groups.

A solubility parameter of the maleimide-modified polyolefin including two or more acidic functional groups may be about 7.0 $(cal/cm^3)^{1/2}$ to about 9.2 $(cal/cm^3)^{1/2}$.

A weight average molecular weight of the maleimide-modified polyolefin including two or more acidic functional groups may be about 10,000 g/mol to about 1,000,000 g/mol.

A melting point ($T_m$) of the maleimide-modified polyolefin including two or more acidic functional groups may be about 170 °C or less.

The maleimide-modified polyolefin including two or more acidic functional groups may be a product of a reaction between an amine compound including two or more acidic functional groups and an (e.g., α,β-unsaturated) dicarboxylic acid anhydride-modified polyolefin.

Maleimide of the maleimide-modified polyolefin including two or more acidic functional groups may be a product of a dehydration reaction between the amine compound including two or more acidic functional groups and the (e.g., α,β-unsaturated) dicarboxylic acid anhydride-modified polyolefin.

An (e.g., α,β-unsaturated) dicarboxylic acid of the α,β-unsaturated dicarboxylic acid anhydride-modified polyolefin may include an anhydric maleic acid.

A modified polyolefin of the (e.g., α,β-unsaturated) dicarboxylic acid anhydride-modified polyolefin may include polyethylene or polypropylene.

A content of polyolefin in the (e.g., α,β-unsaturated) dicarboxylic acid anhydride-modified polyolefin may be 50 mol% or more.

A content of α,β-unsaturated dicarboxylic acid anhydride in the α,β-unsaturated dicarboxylic acid anhydride-modified polyolefin may be 50 mol% or less.

The amine compound including two or more acidic functional groups is represented by Formula 1:

Formula 1

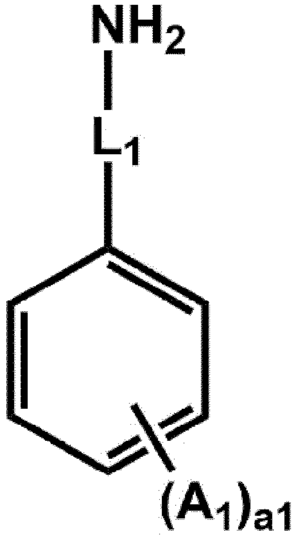

in Formula 1,

$L_1$ may be a $C_1$-$C_{20}$ alkylene group, a $C_2$-$C_{20}$ alkenylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, A1 may be a carboxylic acid group, a sulfonic acid group, or a phosphoric acid group, and a1 may be an integer of 2 to 5.

The amine compound including two or more acidic functional groups may be represented by one of Formulae 1-1 to 1-6:

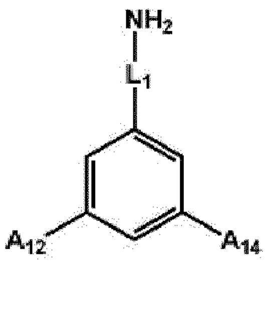

1-1

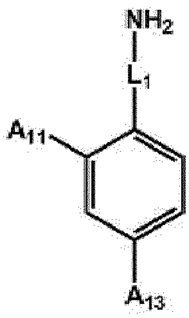

1-2

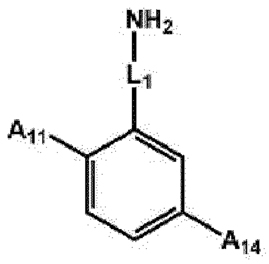

1-3

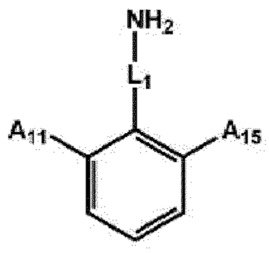

1-4

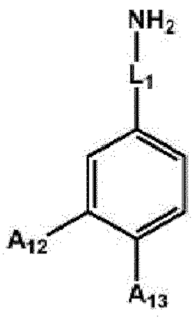

1-5

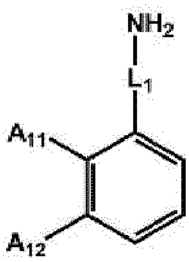

1-6

in Formulae 1-1 to 1-6, $L_1$ may be a $C_1$-$C_{20}$ alkylene group, a $C_2$-$C_{20}$ alkenylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, and An to $A_{15}$ may each independently be a carboxylic acid group, a sulfonic acid group, or a phosphoric acid group.

The conductive particles may include Al, Cu, Ni, or SUS.

An average particle diameter (D50) of the conductive particles may be about 1 $\mu$m to about 100 $\mu$m.

An amount of the conductive particles in the adhesive may be about 0.005 vol% to about 15 vol% with respect to a total volume of the adhesive.

The first adhesive layer and the second adhesive layer may each include a plurality of adhesive application areas, and an area of each of the plurality of adhesive application areas may be about 2 $mm^2$ or more.

The first adhesive layer and the second adhesive layer may each include the adhesive.

Embodiments are directed towards a lithium battery including the electrode structure; an electrode opposite to the electrode structure; and a separator between the electrode structure and the electrode.

The lithium battery may further include an electrolyte between the electrode structure and the electrode.

The electrolyte may include a liquid electrolyte, a solid electrolyte, or a gel electrolyte.

## BRIEF DESCRIPTION OF THE DRAWINGS

Features will become apparent to those of skill in the art by describing in detail exemplary embodiments with reference to the attached drawings in which:

FIG. 1 is a schematic view of an electrode structure according to embodiments;
FIG. 2 is a plan view illustrating an adhesive layer of an electrode structure according to embodiments;
FIG. 3 is a plan view illustrating an adhesive layer of an electrode structure according to embodiments;
FIG. 4 is a schematic view of a lithium battery according to embodiments; and
FIG. 5 is a schematic view of a lithium battery according to embodiments.

## DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. Expressions such as "at least one of," when preceding a list of elements, modify the entire list of elements and do not modify the individual elements of the list. As used herein, the term "or" is not an exclusive term, e.g., "A or B" would include A, B, or A and B

An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" used herein may be interpreted as "and" or "or" according to the context.

Throughout the specification, while such terms as "first," "second," and the like may be used to describe various components, such components should not be limited to the above terms. The above terms are used only to distinguish one component from another. Components having substantially the same functional configuration in the present specification and drawings are denoted by the same reference numerals, and redundant descriptions thereof will be omitted.

As used herein, the term "particle diameter" of particles refers to an average diameter when particles are spherical and refers to an average major axis length when particles are non-spherical. A particle diameter of particles may be measured by using a particle size analyzer (PSA). A "particle diameter" is, for example, an average particle diameter. An average particle diameter refers to, for example, a median particle diameter (D50). The median particle diameter (D50) is a particle size corresponding to a 50 % cumulative volume when a particle size distribution measured through a laser diffraction method is calculated from particles having a smaller particle size.

As used herein, "substituted with halogen" means that any hydrogen included in a polymer is substituted with a halogen or a C1-C5 alkyl group substituted with a halogen.

As used herein, the term "halogen" refers to fluorine, chlorine, bromine, or iodine.

The term "metal" as used herein includes all metals and metalloids such as silicon and germanium in an elemental or ionic state.

The term "alloy" as used herein refers to a mixture of two or more metals.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to a cathode active material or an anode active material.

The terms "delithiate" and "delithiating" as used herein refer to a process of removing lithium from a cathode active material or an anode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

Hereinafter, a binder, an anode including the same, and a lithium battery according to embodiments will be described in more detail.

FIG. 1 is a schematic view of an electrode structure 100 according to embodiments. FIGS. 2 and 3 are plan views illustrating an adhesive layer in the electrode structure 100 according to embodiments.

Referring to FIGS. 1 and 2, the electrode structure 100 includes an electrode current collector 110 including a coated portion 112 and an uncoated portion 114, an electrode active material layer 120 on the coated portion 112 of the electrode current collector 110, a first lead electrode 130 on the uncoated portion 114 of the electrode current collector 110, a second lead electrode 140 attached to the first lead electrode 130, a first adhesive layer 135 between the first lead electrode 130 and the electrode current collector 110 and attaching the first lead electrode 130 to the electrode current collector 110, and a second adhesive layer 145 between the first lead electrode 130 and the second lead electrode 140 and attaching the second lead electrode 140 to the first lead electrode 130, wherein at least one of the first adhesive layer 135 and the second adhesive layer 145 include an adhesive including a binder and conductive particles, the binder including maleimide-modified polyolefin which includes two or more acidic functional groups.

If the first adhesive layer 135 or the second adhesive layer 145 includes the adhesive including the maleimide-modified polyolefin which includes two or more acidic functional groups, the impact strength and high-temperature stability of the electrode structure 100 including the same may be improved by the maleimide-modified polyolefin including two or more acidic functional groups with excellent adhesive properties and high-temperature stability. The impact resistance and high-temperature stability of a lithium battery including the electrode structure 100 may be improved.

An adhesive force may be improved by two or more acidic functional groups included in the maleimide-modified polyolefin. In an implementation, polyolefin may be modified with maleimide, and thus high-temperature stability may be improved. The adhesive including the binder, which includes the maleimide-modified polyolefin including two or more acidic functional groups, may have improved adhesive properties and high-temperature stability.

The adhesive includes the conductive particles so that the first adhesive layer 135 including the adhesive may electrically attach the first lead electrode 130 to the electrode current collector 110 and may reduce the electrical resistance between the first lead electrode 130 and the electrode current collector 110. In other embodiments, the second adhesive layer 145 including the adhesive may electrically attach the second lead electrode 140 to the first lead electrode 130 and may reduce the electrical resistance between the first lead electrode 130 and the second lead electrode 140. The first adhesive layer 135 or the second adhesive layer 145 may include the adhesive, and thus the internal resistance of a lithium battery including the first adhesive layer 135 or the second adhesive layer 145 may be reduced, thereby improving charging/discharging efficiency.

[Adhesive]

According to embodiments, the adhesive may include the binder and the conductive particles, the binder including the maleimide-modified polyolefin which may include two or more acidic functional groups.

A solubility parameter (SP) of the maleimide-modified polyolefin including two or more acidic functional groups may be in a range of about 7.0 $(cal/cm^3)^{1/2}$ to about 9.2 $(cal/cm^3)^{1/2}$. For example, as an SP, an SP value of a polymer may be determined by dissolving the polymer in a good solvent with a known SP value and titrating turbidity with a poor

solvent with a high SP value and a poor solvent with a low SP value as compared with the good solvent.

For example, in a case in which an SP value of a good solvent is denoted by $\delta_g$, an SP value of a poor solvent with a high SP value is denoted by $\delta_{ph}$, and an SP value of a poor solvent with a low SP value is denoted by $\delta_{pl}$, if volume fractions of the poor solvent with a high SP value and the poor solvent with a low SP value at a turbid point are denoted by $\Phi_{ph}$ and $\Phi_{pl}$, respectively, SP values $\delta_{mh}$ and $\delta_{ml}$ of a mixed solvent at a turbid point may each be expressed as a volume average of the SP values of the poor solvent and the good solvent. Equations (1) and (2) below may be established. An SP value $\delta_{poly}$ of the polymer may be an intermediate value between $\delta_{mh}$ and $\delta_{ml}$ and may be represented by Equation (3) below.

$$\delta_{mh} = \Phi_{ph}\delta_{ph} + (1-\Phi_{ph})\,\delta_g \qquad (1)$$

$$\delta_{ml} = \Phi_{pl}\delta_{pl} + (1-\Phi_{pl})\,\delta_g \qquad (2)$$

$$\delta_{poly} = (\delta_{mh}+\delta_{ml})/2 \qquad (3)$$

According to embodiments, an electrolyte absorption amount of the adhesive which includes the maleimide-modified polyolefin including two or more acidic functional groups may be about 30 wt% or less with respect to the total weight of the adhesive. The electrolyte absorption amount of the adhesive may be, e.g., about 25 wt% or less, about 20 wt% or less, or about 15 wt% or less with respect to the total weight of the adhesive.

The electrolyte absorption amount may be an amount of an electrolyte absorbed after the adhesive is completely immersed in the electrolyte and left at a temperature of about 80 °C for about 1 hour and may be calculated through the following equation:

eletrolyte absorption amount (%) = (weight of adhesive after immersion in eletrolyte-weight of adhesive before immersion in electrolyte)/(weight of adhesive before immersion in electrolyte) × 100

A weight average molecular weight Mw of the maleimide-modified polyolefin including two or more acidic functional groups may be 10,000 g/mol or more. A weight average molecular weight Mw may be measured through gel permeation chromatography (GPC) or size exclusion chromatography (SEC). According to embodiments, the weight average molecular weight Mw of the maleimide-modified polyolefin including two or more acidic functional groups may be in a range of about 10,000 g/mol to about 1,000,000 g/mol.

A melting point $T_m$ of the maleimide-modified polyolefin including two or more acidic functional groups may be about 170 °C or less. The melting point $T_m$ of the maleimide-modified polyolefin including two or more acidic functional groups may be, e.g., about 120 °C or less or about 60°C or less. The melting point $T_m$ of the maleimide-modified polyolefin including two or more acidic functional groups may be in a range of, e.g., about 40 °C to about 170 °C or about 40 °C to about 60 °C.

The maleimide-modified polyolefin including two or more acidic functional groups may be a product of a reaction between an amine compound including two or more acidic functional groups and an α,β-unsaturated dicarboxylic acid anhydride-modified polyolefin.

According to embodiments, maleimide of the maleimide-modified polyolefin including two or more acidic functional groups may be a product of a dehydration reaction between an amine compound including two or more acidic functional groups and an α,β-unsaturated dicarboxylic acid anhydride-modified polyolefin.

The maleimide of the maleimide-modified polyolefin including two or more acidic functional groups may be a product of reaction between an amine compound including two or more acidic functional groups and (e.g., α,β-unsaturated) dicarboxylic acid anhydride-modified polyolefin according to Reaction Formula 1 below.

Reaction Formula 1

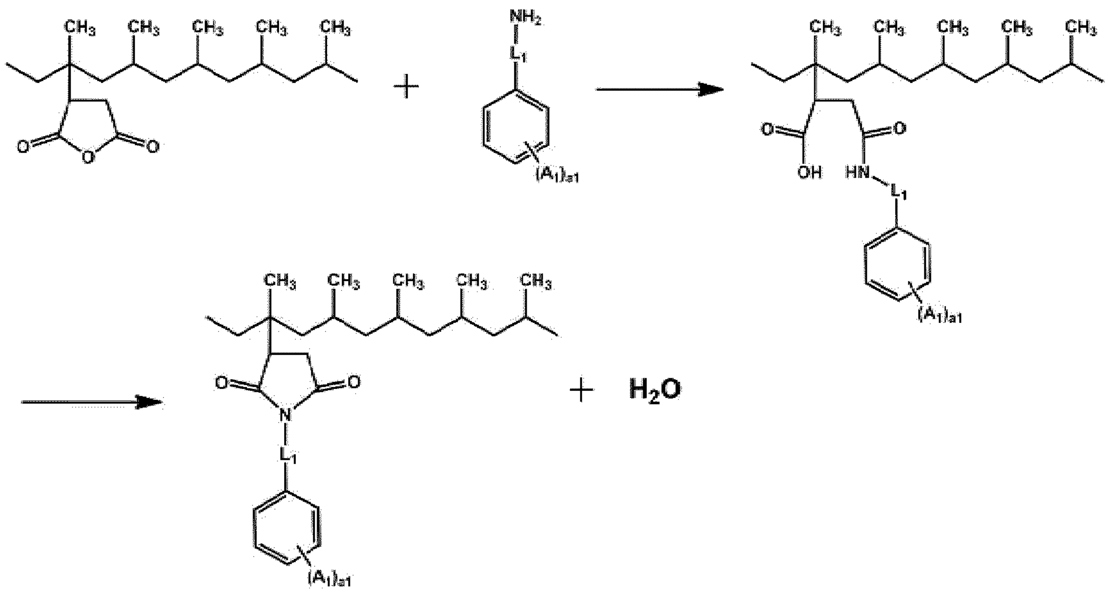

The maleimide of the maleimide-modified polyolefin including two or more acidic functional groups may be prepared by performing a dehydration reaction between an amine group of the amine compound including two or more acidic functional groups and an (e.g., α,β-unsaturated) dicarboxylic acid anhydride of the (e.g., α,β-unsaturated) dicarboxylic acid anhydride-modified polyolefin.

The α,β-unsaturated dicarboxylic acid anhydride-modified polyolefin may be prepared by grafting polyolefin with a monomer having an α,β-unsaturated dicarboxylic acid anhydride structure. The monomer having the α,β-unsaturated dicarboxylic acid anhydride structure may include an α,β-unsaturated dicarboxylic acid, an α,β-unsaturated dicarboxylic acid anhydride, an α,β-unsaturated dicarboxylic acid monoester, an α,β-unsaturated dicarboxylic acid diester, an α,β-unsaturated dicarboxylic acid derivative in which a functional group is bonded to an α,β-unsaturated dicarboxylic acid, an α,β-unsaturated dicarboxylic acid salt, or a mixture thereof.

The monomer having the α,β-unsaturated dicarboxylic acid anhydride structure may be a monomer having a maleic anhydride structure, and the monomer having the maleic anhydride structure may include a maleic acid, an anhydric maleic acid, a maleic monoester, a maleic diester, a maleic derivative in which a functional group is bonded to a maleic acid, a maleate, or a mixture thereof. A maleic anhydride derivative in which a functional group is bonded to an anhydric maleic acid may include a 2,3-dimethylmaleic anhydride, a phenylmaleic anhydride, or the like.

The α,β-unsaturated dicarboxylic acid anhydride-modified polyolefin may be prepared by grafting polyolefin with an α,β-unsaturated dicarboxylic acid anhydride. In an implementation, if, rather than an α,β-unsaturated dicarboxylic acid anhydride, an α,β-unsaturated dicarboxylic acid, an α,β-unsaturated dicarboxylic acid monoester, an α,β-unsaturated dicarboxylic acid diester, an α,β-unsaturated dicarboxylic acid derivative in which a functional group is bonded to an α,β-unsaturated dicarboxylic acid, or an α,β-unsaturated dicarboxylic acid salt is used, a prepared modified polyolefin may be treated at a high temperature and dehydrated, thereby preparing the α,β-unsaturated dicarboxylic acid anhydride-modified polyolefin.

The α,β-unsaturated dicarboxylic acid anhydride of the α,β-unsaturated dicarboxylic acid anhydride-modified polyolefin may include an anhydric maleic acid.

The modified polyolefin of the α,β-unsaturated dicarboxylic acid anhydride-modified polyolefin may include polyethylene (PE) or polypropylene (PP).

A copolymer of the α,β-unsaturated dicarboxylic acid anhydride-modified polyolefin may be in the form of a random copolymer or a graft copolymer and may be in a highly branched or dendrimer form.

A content of polyolefin in the α,β-unsaturated dicarboxylic acid anhydride-modified polyolefin may be about 50 mol% or more. The content of the polyolefin in the α,β-unsaturated dicarboxylic acid anhydride-modified polyolefin may be, e.g., about 75 mol% or more or about 90 mol% or more.

A content of an anhydric maleic acid in the α,β-unsaturated dicarboxylic acid anhydride-modified polyolefin may be 50 mol% or less. The content of the anhydric maleic acid in the α,β-unsaturated dicarboxylic acid anhydride-modified polyolefin may be, e.g., about 25 mol% or less, about 15 mol% or less, or in a range of about 5 mol% to about 15 mol%. For example, by using proton nuclear magnetic resonance ($^1$H-NMR), the content of the anhydric maleic acid may be calculated from a ratio of an area corresponding to the anhydric maleic acid to the total area of $^1$H-NMR peaks.

The α,β-unsaturated dicarboxylic acid anhydride-modified polyolefin may be prepared by copolymerizing polyolefin with a monomer having an α,β-unsaturated dicarboxylic acid structure, a metal-adhesive comonomer, or other

co-monomers. The metal-adhesive comonomer may include an acrylic acid derivative, e.g., an acrylic acid or a methacrylic acid, vinyl alcohol, an acrylic acid ester derivative including a hydroxy alkyl group, an acrylic acid ester derivative including a carboxy alkyl group, or a mixture thereof. The metal-adhesive comonomer may include a hydroxyl group or a carboxyl group (including an anhydride structure) with metal-adhesive properties, an acid component (sulfonic acid, phosphonic acid, or the like), a polymerizable compound, which may include a functional group (e.g., a trimethoxysilyl group) that cause a reaction with a metal surface, e.g., a silane coupling reaction, or a mixture thereof. Other comonomers may include, e.g., ethylene, styrene, or a mixture thereof. If the other comonomers are included, a melting point of an adhesive resin may be lowered, and fluidity may be improved.

The acidic functional group of the amine compound including two or more acidic functional groups may include, e.g., a carboxylic acid, a sulfonic acid, or a phosphoric acid. The acidic functional group may include a carboxylic acid.

The amine compound including two or more acidic functional groups may be represented by Formula 1.

Formula 1

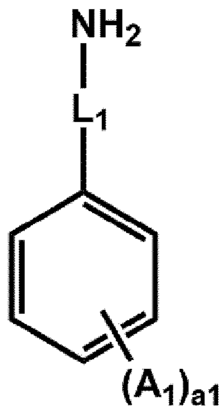

In Formula 1, $L_1$ is a $C_1$-$C_{20}$ alkylene group, a $C_2$-$C_{20}$ alkenylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, $A_1$ is a carboxylic acid group, a sulfonic acid group, or a phosphoric acid group and $a_1$ is an integer of 2 to 5.

In Formula 1, A1 may be a carboxylic acid group.

In Formula 1, a1 may be an integer of 2 to 4, in particular a1 may be 2.

The amine compound including two or more acidic functional groups may be represented by any one of Formulae 1-1 to 1-6 below.

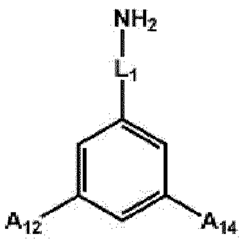

1-1

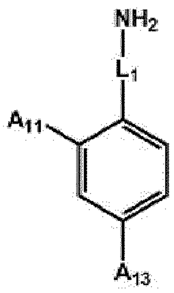

1-2

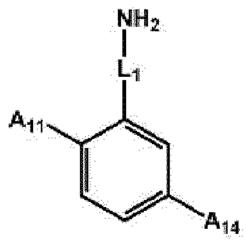

1-3

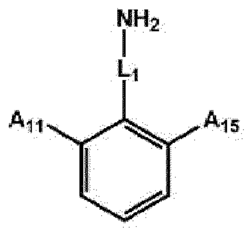

1-4

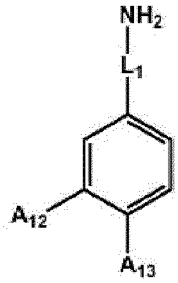

1-5

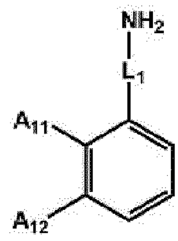

1-6

In Formulae 1-1 to 1-6, $L_1$ is a $C_1$-$C_{20}$ alkylene group, a $C_2$-$C_{20}$ alkenylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, and An to $A_{15}$ are each independently a carboxylic acid group, a sulfonic acid group, or a phosphoric acid group. An to $A_{15}$ may each independently be a carboxylic acid group.

The amine compound including two or more acidic functional groups may be represented by one of Formulae 1-1 to 1-4.

The adhesive may include the conductive particles. The conductive particles may include, e.g., Al, Cu, Ni, or SUS.

According to embodiments, an average particle diameter (D50) of the conductive particles may be in a range of about 1 μm to about 100 μm. The average particle diameter (D50) of the conductive particles may be in a range of, e.g., about 1 μm to about 50 μm, about 1 μm to about 40 μm, about 1 μm to about 30 μm, about 1 μm to about 20 μm, or about 1 μm to about 10 μm.

An amount of the conductive particles in the adhesive may be in a range of about 100 pcs/mm$^2$ to about 100,000 pcs/mm$^2$. The amount of the conductive particles in the adhesive may be in a range of, e.g., about 100 pcs/mm$^2$ to about 50,000 pcs/mm$^2$, about 100 pcs/mm$^2$ to about 10,000 pcs/mm$^2$, about 100 pcs/mm$^2$ to about 3,500 pcs/mm$^2$, about 100 pcs/mm$^2$ to about 2,000. pcs/mm$^2$, about 200 pcs/mm$^2$ to about 100,000 pcs/mm$^2$, about 300 pcs/mm$^2$ to about 100,000 pcs/mm$^2$, about 400 pcs/mm$^2$ to about 100,000 pcs/mm$^2$, about 500 pcs/mm$^2$ to about 100,000 pcs/mm$^2$, about 600 pcs/mm$^2$ to about 100,000 pcs/mm$^2$, about 200 pcs/mm$^2$ to about 3,500 pcs/mm$^2$, or about 200 pcs/mm$^2$ to about 2,000 pcs/mm$^2$.

The amount of the conductive particles in the adhesive may be in a range of about 0.005 vol% to about 15 vol% with respect to the total volume of the adhesive. The amount of the conductive particles in the adhesive may be in a range of, e.g., about 0.1 vol% to about 15 vol%, about 0.2 vol% to about 15 vol%, about 0.3 vol% to about 15 vol%, about 0.4 vol% to about 15 vol%, about 0.5 vol% to about 15 vol%, about 0.6 vol% to about 15 vol%, about 1.0 vol% to about 15 vol%, about 1.3 vol% to about 15 vol%, about 0.005 vol% to about 10 vol%, about 0.005 vol% to about 9 vol%, about 0.005 vol% to about 8 vol%, about 0.005 vol% to about 6 vol%, or about 0.6 vol% to about 6 vol% with respect to the total volume of the adhesive.

[First adhesive layer 135 and second adhesive layer 145]

The first adhesive layer 135 may include the above-described adhesive. The second adhesive layer 145 may include the above-described adhesive. The first adhesive layer 135 and the second adhesive layer 145 may each include the above-described adhesive.

Referring to FIGS. 2 and 3, the first adhesive layer 135 and the second adhesive layer 145 may include a plurality of adhesive application areas 133 and a plurality of adhesive application areas 143, respectively, and the plurality of adhesive application areas 133 and the plurality of adhesive application areas 143 may each have an area of 2 mm$^2$ or more. The first adhesive layer 135 may include the plurality of adhesive application areas 133, and each of the plurality of adhesive application areas 133 may have an area of 2 mm$^2$ or more. The second adhesive layer 145 may include the plurality of adhesive application areas 143, and each of the plurality of adhesive application areas 143 may have an area of 2 mm$^2$ or more. The plurality of adhesive application areas 133 and the plurality of adhesive application areas 143 may have an adhesive force of 180 gf or more per 1 mm$^2$, and the areas of the plurality of adhesive application areas 133 and the plurality of adhesive application areas 143 may satisfy the above ranges, thereby easily implementing an adhesive force of 300 gf or more. In this regard, the impact resistance of a lithium battery including the plurality of adhesive application areas 133 and the plurality of adhesive application areas 143 may be improved.

The plurality of adhesive application areas 133 and the plurality of adhesive application areas 143 may each have an area of, e.g., about 2 mm$^2$ to about 20 mm$^2$, about 2 mm$^2$ to about 10 mm$^2$, or about 2 mm$^2$ to about 5 mm$^2$

The first adhesive layer 135 and the second adhesive layer 145 may each have a thickness of about 1 μm to

about 10 μm. The first adhesive layer 135 and the second adhesive layer 145 may each have a thickness of, e.g., about 2 μm to about 10 μm, about 3 μm to about 10 μm, about 4 μm to about 10 μm, or about 5 μm to about 10 μm.

The first adhesive layer 135 and the second adhesive layer 145 may each be disposed in the form of, e.g., a plane figure having a polygonal, circular, or oval planar shape; and a linear or dot array having a straight line, diagonal line, curved line, or zigzag shape. The adhesive application areas 133 and 143 may each be disposed in the form of, e.g., a plane figure having a polygonal, circular, or oval planar shape; and a linear or dot array having a straight line, diagonal line, curved line, or zigzag shape.

Each of the first adhesive layer 135 and the second adhesive layer 145 may further include a tackifier or additives in addition to the above-described adhesive. The tackifier may include a rosin tackifier. Examples of the additives may include a crosslinking agent, a metal surface modifier (a silane coupling agent, an acid derivative such as a phosphoric acid compound, a metal oxide compound of a zirconium, titanium phosphate, titanic acid, or chromic acid derivative, or the like), and the like. The above additives may be used alone or in combination of two or more types.

[Lithium battery]

A lithium battery according to embodiments may include the electrode structure 100 described above, an electrode opposite to the electrode structure 100, and a separator between the electrode structure 100 and the electrode.

The electrode structure 100 may be a cathode or an anode. The electrode may be an electrode opposite to the electrode structure 100. If the electrode structure 100 is a cathode, the electrode may be an anode, and if the electrode structure 100 is an anode, the electrode may be a cathode.

If the electrode structure 100 is a cathode, the electrode structure 100 may include a cathode current collector including an uncoated portion and a coated portion, and a cathode active material layer on the coated portion of the cathode current collector. If the electrode structure 100 is an anode, the electrode structure 100 may include an anode current collector including an uncoated portion and a coated portion, and an anode active material layer on the coated portion of the anode current collector.

[Anode]

An anode according to embodiments may include an anode current collector, and an anode active material layer on the anode current collector. In an implementation the anode active material layer may include an anode active material, a binder, and a conductive material.

An anode for a lithium battery according to embodiments may include an anode current collector, and an electrodeposition induction layer on one surface of the anode current collector.

[Anode: Anode current collector]

As a material constituting the anode current collector, any material, which does not react with lithium, e.g., any material, which does not form an alloy or compound together with lithium and has conductivity, may be used. The anode current collector may include, e.g., a metal or an alloy. The anode current collector may consist of, e.g., indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof.

The anode current collector may include, e.g., a first metal substrate. The first metal substrate may include a first metal as a main component or may consist of the first metal. A content of the first metal included in the first metal substrate may be, e.g., about 90 wt% or more, about 95 wt% or more, about 99 wt% or more, or about 99.9 wt% or more with respect to a total weight of the first metal substrate. The first metal substrate may consist of, e.g., a material that does not react with lithium, i.e., does not form an alloy or compound together with lithium.

Examples of the first metal may include copper (Cu), nickel (Ni), stainless steel (SUS), iron (Fe), and cobalt (Co). Any suitable material may be used as a current collector. The first metal substrate may consist of, e.g., one of the above-described metals or an alloy of two or more metals. The first metal substrate may be, e.g., in the form of a sheet or foil. A thickness of the anode current collector may be, e.g., in a range of about 5 μm to about 50 μm, about 10 μm to about 50 μm, about 10 μm to about 40 μm, or about 10 μm to about 30 μm. The thickness of the anode current collector may be selected according to the required characteristics of a lithium battery.

The anode current collector may further include a coating layer including a second metal on the first metal substrate.

The anode current collector may include, e.g., the first metal substrate, and the coating layer on the first metal substrate and including the second metal. The second metal may have a higher Mohs hardness than the first metal. The coating layer including the second metal may be harder than a substrate including the first metal, and thus the deterioration of the first metal substrate may be prevented. A material constituting the first metal substrate may have,

e.g., a Mohs hardness of about 6.0 or less. The first metal may have, e.g., a Mohs hardness of about 5.5 or less, about 5.0 or less, about 4.5 or less, about 4.0 or less, about 3.5 or less, or about 3.0 or less. The first metal may have, e.g., a Mohs hardness of about 2.0 to about 6.0. The coating layer may include the second metal. The coating layer may include, e.g., the second metal as a main component or may consist of the second metal. A content of the second metal included in the coating layer may be, e.g., about 90 wt% or more, about 95 wt% or more, about 99 wt% or more, or about 99.9 wt% or more with respect to the total weight of the coating layer. The coating layer may consist of, e.g., a material that does not react with lithium, i.e., does not form an alloy or compound together with lithium. A material constituting the coating layer may have, e.g., a Mohs hardness of about 6.0 or more. The second metal may have a Mohs hardness of about 6.0 or more, about 6.5 or more, about 7.0 or more, about 7.5 or more, about 8.0 or more, about 8.5 or more, or about 9.0 or more. The second metal may have, e.g., a Mohs hardness of about 6.0 to about 12.0. If the Mohs hardness of the second metal is excessively low, it may be difficult to suppress the deterioration of the anode current collector. If the Mohs hardness of the second metal is excessively high, processing may not be easy. The second metal may include, e.g., titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), or rhodium (Rh). The coating layer may consist of, e.g., one of the above-described metals or an alloy of two or more metals. A difference in Mohs hardness between the first metal included in the first metal substrate and the second metal included in the coating layer may be, e.g., about 2 or more, about 2.5 or more, about 3 or more, about 3.5 or more, or about 4 or more. The first metal and the second metal may have such a difference in Mohs hardness, and thus the deterioration of the anode current collector may be more effectively suppressed. The coating layer may have a single-layer structure or a multi-layer structure including two or more layers. The coating layer may have, e.g., a two-layer structure including a first coating layer and a second coating layer. The coating layer may have, e.g., a three-layer structure including a first coating layer, a second coating layer, and a third coating layer. A thickness of the coating layer may be, e.g., in a range of about 10 nm to about 1 μm, about 50 nm to about 500 nm, about 50 nm to about 200 nm, or about 50 m to about 150 nm. If the coating layer is excessively thin, it may be difficult to suppress the non-uniform growth of a lithium-containing metal layer. As the thickness of the coating layer increases, the cycle characteristics of a lithium battery may be improved. However, if the coating layer is excessively thick, the energy density of a lithium battery may decrease, and it may not be easy to form the coating layer. The coating layer may be on the first metal substrate through, e.g., vacuum deposition, sputtering, plating, or the like. Any suitable method of providing a coating layer may be used.

The anode current collector may have a reduced thickness as compared with other anode current collectors included in an anode. The anode according to the present disclosure may include, e.g., a thin film current collector and thus may be distinguished from other electrodes including a thick film current collector. An electrode according to embodiments may adopt a thin film current collector having a reduced thickness, and thus, in an anode including the thin film current collector, a thickness of a lithium electrodeposition layer may relatively increase. The energy density of a lithium battery adopting such an electrode may increase. A thickness of the anode current collector may be, e.g., less than about 15 μm, about 14.5 μm or less, or about 14 μm or less. The thickness of the anode current collector may be, e.g., in a range of about 0.1 μm to less than about 15 μm, about 1 μm to about 14.5 μm, about 2 μm to about 14 μm, about 3 μm to about 14 μm, about 5 μm to about 14 μm, or about 10 μm to about 14 μm.

The anode current collector may have a form of a sheet, foil, a film, a plate, a porous body, a mesoporous body, a through-hole-containing body, a polygonal ring body, a mesh body, a foam body, and a non-woven body. Any suitable form used may be used.

The anode current collector may include, e.g., a base film and a metal substrate layer on one surface or two surfaces of the base film. The anode current collector may include a substrate, and the substrate may have a structure including, e.g., a base film and a metal substrate layer on one surface or two surfaces of the base film. An interlayer layer may be additionally on the metal substrate layer.

The base film may include, e.g., a polymer. The polymer may be, e.g., a thermoplastic polymer. The polymer may include, e.g., polyethylene terephthalate (PET), PE, PP, polybutylene terephthalate (PBT), polyimide (PI), or a combination thereof. The base film may include the thermoplastic polymer, and thus during a short circuit, the base film may be melted to suppress a rapid increase in current. The base film may be, e.g., an insulator. The metal substrate layer may include, e.g., copper (Cu), stainless steel, titanium (Ti), iron (Fe), cobalt (Co), nickel (Ni), or an alloy thereof. The metal substrate layer may serve as an electrochemical fuse and may be cut upon an overcurrent, thereby performing a short circuit prevention function. A thickness of the metal substrate layer may be adjusted to adjust a limit current and a maximum current. The metal substrate layer may be plated or deposited on the base film. If the thickness of the metal substrate decreases, a limit current or a maximum current of the anode current collector may decrease, and thus the stability of a lithium metal battery during a short circuit may be improved. A lead tab may be added onto the metal substrate layer for external connection. The lead tab may be welded to the metal substrate layer or a metal substrate layer/base film stack through ultrasonic welding, laser welding, spot welding, or the like. While the base film or the metal substrate layer are melted during welding, the metal substrate layer may be electrically connected to the lead tab. In order to more strongly weld the metal substrate layer and the lead tab, a metal chip may be added between the metal

substrate layer and the lead tab. The metal chip may be a flake consisting of the same material as a metal of the metal substrate layer. The metal chip may be, e.g., metal foil or a metal mesh. The metal chip may be, e.g., aluminum foil, copper foil, or SUS foil. The metal chip may be on the metal substrate layer and then welded to the lead tab, and thus the lead tab may be welded to a metal chip/metal substrate layer stack or a metal chip/metal substrate layer/base film stack. During welding, while the base film, the metal layer, or the metal chip are melted, the metal layer or a metal layer/metal chip stack may be electrically connected to the lead tab. A metal chip and/or a lead tab may be added onto a portion of the metal substrate layer. A thickness of the base film may be, e.g., in a range of about 1 μm to about 50 μm, about 1.5 μm to about 50 μm, about 1.5 μm to about 40 μm, or about 1 μm to about 30 μm. The base film may have a thickness in such a range, and thus a weight of an anode assembly may be more effectively reduced. A melting point of the base film may be, e.g., in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve an adhesive force between the base film and the metal substrate layer, surface treatment such as corona treatment may be performed on the base film. The thickness of the metal substrate layer may be, e.g., in a range of about 0.01 μm to about 3 μm, about 0.1 μm to about 3 μm, about 0.1 μm to about 2 μm, or about 0.1 μm to about 1 μm. The metal substrate layer may have a thickness in such a range, and thus the stability of the anode may be secured while conductivity is maintained. A thickness of the metal chip may be, e.g., in a range of about 2 μm to about 10 μm, about 2 μm to about 7 μm, or about 4 μm to about 6 μm. The metal chip may have a thickness in such a range, and thus the metal layer and the lead tab may be more easily connected. The anode current collector may have such a structure, and thus a weight of an electrode may be reduced, thereby improving an energy density.

[Anode: Anode active material layer]

According to embodiments, the anode may include an anode active material layer on the anode current collector, and the anode active material layer may include an anode active material, a conductive agent, and a binder. An anode active material, a conductive agent, a binder, and a solvent may be mixed to prepare an anode active material composition, and the anode active material composition may be directly applied onto an anode current collector to prepare an anode plate. In other embodiments, the prepared anode active material composition may be cast on a separate support, and an anode active material film peeled off of the support may be laminated on an anode current collector to prepare the anode plate.

As the anode active material, any suitable material may be used. The anode active material may include, e.g., a lithium metal, a metal alloyable with lithium, a transition metal oxide, a non-transition metal oxide, and a carbon material.

Examples of the metal alloyable with lithium may include, e.g., Si, Sn, Al, Ge, Pb, Bi, Sb, a Si-Y alloy, wherein Y may be, e.g., an alkali metal, an alkali earth metal, a Group 13 element, a Group 14 element, a transition metal, a rare earth element, or a combination thereof and may not be Si, a Sn-Y alloy, wherein Y may be an alkali metal, an alkali earth metal, a Group 13 element, a Group 14 element, a transition metal, a rare earth element, or a combination thereof and may not be Sn, or the like. The element Y may include, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may be, e.g., lithium titanium oxide, vanadium oxide, lithium vanadium oxide, or the like.

The non-transition metal oxide may be, e.g., $SnO_2$, $SiO_x$, wherein $0<x<2$, or the like.

The carbon material may be, e.g., crystalline carbon, amorphous carbon, or a mixture thereof. The crystalline carbon may be, e.g., graphite such as non-shaped, plate-shaped, flake-shaped, spherical, or fibrous natural graphite or artificial graphite. The amorphous carbon may be, e.g., soft carbon (low-temperature calcined carbon), hard carbon, mesophase pitch carbide, calcined coke, or the like.

Contents of the anode active material, conductive agent, binder, and solvent may be at suitable levels. According to the use and configuration of a lithium battery, one or more of the conductive material, the binder, and the solvent may be omitted.

[Cathode: Electrodeposition induction layer]

The anode may include the electrodeposition induction layer on the anode current collector. The electrodeposition induction layer may include a lithium affinity metal and a carbon material. The lithium affinity metal may include, e.g., silver (Ag) or gold (Au). The carbon material may include Denka black. A lithium metal may be electrodeposited on the electrodeposition induction layer.

According to embodiments, a thickness of the electrodeposition induction layer may be in a range of about 1 μm to about 10 μm. The thickness of the electrodeposition induction layer may be, e.g., in a range of about 1 μm to

about 8 μm, about 1 μm to about 6 μm, about 1 μm to about 5 μm, about 1.5 μm to about 10 μm, about 2 μm to about 10 μm, or about 2 μm to about 5 μm. The electrodeposition induction layer may have a thickness in such a range, while the internal resistance of the anode may be effectively reduced, the generation or growth of lithium dendrites may be effectively prevented. The cycle characteristics of a lithium battery including the electrodeposition induction layer may be further improved. If the thickness of the electrodeposition induction layer excessively increases, the internal resistance of a lithium metal battery may increase. If the thickness of the electrodeposition induction layer excessively decrease, an electrodeposition inducing effect by the electrodeposition induction layer may be insignificant.

According to embodiments, the electrodeposition induction layer may include a binder.

The binder may be a non-conductive binder or a conductive binder. The conductive binder may be, e.g., an ion-conductive binder, an electron-conductive binder, or a combination thereof.

Examples of the binder other than the above-described binder may include polystyrene sulfonate (PSS), a polyvinylidene fluoride-hexafluoropropylene (PVDF-HFP) copolymer, polyvinyl fluoride (PVF), polyvinylidene fluoride (PVDF), a poly(meth)acrylic acid, poly(meth)acrylate, poly(methylmethacrylate) (PMMA), polyethylene oxide (PEO), polyethylene glycol (PEG), polyacrylonitrile (PAN), an acrylonitrile-styrene-butadiene copolymer, polytetrafluoroethylene (PTFE), polyethylenedioxythiophene (PEDOT), polypyrrole (PPY), polyaniline, polyacetylene, polytetrafluoroethylene (PTFE), styrene-butadiene rubber (SBR), PI, polyamidoimide (PAI), carboxymethylcellulose (CMC), polyvinyl chloride (PVC), polyacrylonitrile (PAN), modified polyphenylene oxide (PPO), PE, PP, and the like, but one or more embodiments are not necessarily limited thereto. The ion-conductive binder may include a polar functional group. Examples of the ion-conductive binder including a polar functional group may include Nafion™, Aquivion®, Flemion®, Gore™, Aciplex™, Morgane®-ADP, sulfonated poly(ether ether ketone) (SPEEK), sulfonated poly(arylene ether ketone ketone sulfone) (SPAEKKS), sulfonated poly(sulfonated poly(aryl ether ketone) (SPAEK), poly[bis(benzimidazolbenzisoquinolinones)] (SPBIBI), poly(styrene sulfonate (PSS), lithium 9,10-diphenylanthracene-2-sulfonate ($DPASLi^+$), and the like. Examples of the electron-conductive binder may include polyacetylene, polythiophene, PPY, poly(p-phenylene), poly(phenylenevinylene), poly(phenylenesulfide), polyaniline, and the like.

The binder other than the above-described binder may be, e.g., an acrylic binder or a fluorine binder. The fluorine binder included in the electrodeposition induction layer may include, e.g., PVDF, PTFE, a PVDF-HFP copolymer, polyvinylidene, or the like. The acrylic binder included in the electrodeposition induction layer may include, e.g., a poly(meth)acrylic acid, poly(meth)acrylate, polymethyl(meth)acrylate, PAN, an acrylonitrile-styrene-butadiene copolymer, or the like.

A content of the binder may be, e.g., in a range of about 3 wt% to about 20 wt%, about 3 wt% to about 15 wt%, about 3 wt% to about 10 wt%, about 3 wt% to about 7 wt%, or about 4 wt% to about 7 wt% with respect to the total weight of the electrodeposition induction layer.

The electrodeposition induction layer may further include a conductive material.

The conductive material may include carbon black (CB), acetylene black (AB), Denka black, Ketjen black (KB), carbon nanotubes, carbon nanofibers, carbon nanobelts, graphene, graphene oxide, fullerene, activated carbon, a carbon fiber, or a combination thereof.

The electrodeposition induction layer may be prepared by curing an electrodeposition induction layer-providing composition including the lithium affinity metal and the carbon material. The electrodeposition induction layer-providing composition may further include the above-described binder or the above-described conductive agent. The electrodeposition induction layer may be formed, e.g., by applying the electrodeposition induction layer-providing composition onto an anode current collector and then curing the electrodeposition induction layer-providing composition at a temperature of about 100 °C or more.

The electrodeposition induction layer may be provided, e.g., by applying the electrodeposition induction layer-providing composition on an anode current collector and then heat-treating the electrodeposition induction layer-providing composition at a temperature of about 100 °C or more for about 1 hour to about 10 hours. The electrodeposition induction layer may be provided, e.g., by applying the electrodeposition induction layer-providing composition on an anode current collector and then heat-treating the electrodeposition induction layer-providing composition at a temperature of about 160 °C or more for about 1 hour to about 10 hours.

[Anode: Lithium electrodeposition layer]

The anode may include the anode current collector, the electrodeposition induction layer on the anode current collector, and the lithium electrodeposition layer on the electrodeposition induction layer, and the lithium electrodeposition layer may include a lithium metal or a lithium alloy.

After the anode is introduced into a lithium battery along with a cathode and an electrolyte, a lithium metal may be plated on the lithium electrodeposition layer through charging, and thus the lithium electrodeposition layer may be provided. The lithium electrodeposition layer may include, e.g., the lithium metal or the lithium alloy.

The lithium alloy may be an alloy of lithium and a metal, which is alloyable with lithium, other than lithium. The

lithium alloy may be, e.g., a lithium-silver alloy, a lithium-zinc alloy, a lithium-magnesium alloy, a lithium-tin alloy, or the like.

The lithium electrodeposition layer may include a spherical lithium metal or a spherical lithium alloy.

An average particle diameter (D50) of the lithium metal or lithium alloy of the above embodiments may be, e.g., in a range of about 0.1 μm to about 15 μm, about 0.1 μm to about 12 μm, about 0.1 μm to about 10 μm, about 1 μm to about 15 μm, about 2 μm to about 15 μm, about 3 μm to about 15 μm, or about 3 μm to about 10 μm.

A thickness of the lithium electrodeposition layer may be, e.g., about 50 μm or less, about 40 μm or less, about 35 μm or less, about 30 μm or less, or in a range of about 1 μm to about 50 μm, about 1 μm to about 40 μm, about 5 μm to about 40 μm, about 1 μm. to about 35 μm, or about 10 μm to about 35 μm. The lithium electrodeposition layer may have a thickness in such ranges, and thus the energy density of a lithium battery may be further improved.

The thickness of the lithium electrodeposition layer upon full charging may be, e.g., 35μm or less, 30 μm or less, 28 μm or less, or in a range of about 10 μm to about 35 μm, about 10 μm to about 30 μm, or about 10 μm to about 28 μm.

[Anode: Anode interlayer]

The anode may optionally further include an anode interlayer between the above-described anode current collector and the electrodeposition induction layer. The anode may optionally include the anode interlayer, and thus the generation or growth of lithium dendrites in the anode may be more effectively suppressed. The anode interlayer may be omitted.

The anode interlayer may include, e.g., an anode active material and a binder. The anode active material may be an anode material that may be lithiated and delithiated. The anode active material included in the anode interlayer may have, e.g., a particle form. The anode active material having the particle form may have, e.g., an average particle diameter of about 10 nm to about 4 μm, about 10 nm to about 1 μm, about 10 nm to about 500 nm, about 10 nm to about 100 nm, or about 20 nm to about 80 nm. The anode active material may have an average particle diameter in such a range, and thus the reversible plating and/or dissolution of lithium may be more easily performed during charging/discharging. The average particle diameter of the anode active material may be, e.g., a median diameter (D50) measured by using a laser type particle size distribution meter.

The anode active material included in the anode interlayer may include, e.g., a carbon anode active material and a metal or metalloid anode active material. The carbon anode active material may be, e.g., amorphous carbon. Examples of the carbon anode active material may include CB, AB, furnace black (FB), KB, graphene, or the like. Any material classified as amorphous carbon in the art may be used. The amorphous carbon may be carbon that has no crystallinity or very low crystallinity and may be distinguished from crystalline carbon or graphite carbon. The metal or metalloid anode active material may include, e.g., gold (Au), platinum (Pt), palladium (Pd), silicon (Si), silver (Ag), aluminum (Al), bismuth (Bi), tin (Sn), or zinc (Zn). Any suitable material which may be used as a metal anode active material or a metalloid anode active material and which forms an alloy or compound together with lithium may be used. For example, nickel (Ni) may not form an alloy together with lithium and thus may not be a metal anode active material in the present specification. The anode interlayer may include one type of anode active material among such anode active materials or a mixture of a plurality of different anode active materials. The anode interlayer may include, e.g., a mixture of amorphous carbon and, e.g., gold (Au), platinum (Pt), palladium (Pd), silicon (Si), silver (Ag), aluminum (Al), bismuth (Bi), tin (Sn), or zinc (Zn). A mixing ratio of amorphous carbon and at least one metal in the mixture may be, e.g., a weight ratio of about 10:1 to about 1:2, about 10:1 to about 1:1, about 7:1 to about 1:1, about 5:1 to about 1:1, or about 4:1 to about 2:1. The anode active material included in the anode interlayer may include, e.g., a mixture of first particles consisting of amorphous carbon and second particles consisting of metal or metalloid. Examples of the metal may include, e.g., gold (Au), platinum (Pt), palladium (Pd), silicon (Si), silver (Ag), aluminum (Al), bismuth (Bi), tin (Sn), zinc (Zn), and the like. A content of the second particles may be in a range of about 8 wt% to about 60 wt%, about 10 wt% to about 50 wt%, about 15 wt% to about 40 wt%, or about 20 wt% to about 30 wt% with respect to the total weight of the mixture. The content of the second particles may be in such a range, and thus, e.g., the cycle characteristics of a lithium battery may be further improved.

The binder included in the anode interlayer may include, e.g., SBR, PTFE, PVDF, PE, a vinylidene fluoride/hexafluoropropylene copolymer, PAN, polymethyl methacrylate, or the like. Any suitable material may be used. The binder may be provided as a single binder or a plurality of different binders. If the anode interlayer does not include a binder, the anode interlayer may be easily separated from the anode current collector. A content of the binder included in the anode interlayer may be, e.g., in a range of about 1 wt% to about 20 wt% with respect to the total weight of the anode interlayer.

A thickness of the anode interlayer may be, e.g., in a range of about 1 μm to about 20 μm, about 1 μm to about 15 μm, about 2 μm to about 10 μm, or about 3 μm to about 7 μm. The thickness of the anode interlayer may be, e.g., in a range of about 1% to about 50%, about 1% to about 30%, about 1% to about 10%, or about 1% to about 5% of a thickness of a anode active material layer. If the anode interlayer is excessively thin, lithium dendrites formed between

the anode interlayer and the anode current collector may collapse the anode interlayer, which may make it difficult to improve the cycle characteristics of a lithium battery. If the thickness of the anode interlayer excessively increases, the energy density of a lithium battery adopting the anode interlayer may decrease, and the cycle characteristics thereof may be difficult to improve. If the thickness of the anode interlayer decreases, e.g., a charge capacity of the anode interlayer may also decrease. The charge capacity of the anode interlayer may be, e.g., in a range of about 0.1% to about 50 %, about 1% to about 30%, about 1% to about 10%, about 1% to about 5%, or about 1% to about 2% of charge capacity of the anode. If the charge capacity of the anode interlayer is excessively low, lithium dendrites formed between the anode interlayer and the anode current collector may collapse the anode interlayer, which may make it difficult to improve the cycle characteristics of a lithium battery. If the charge capacity of the anode interlayer excessively increases, the energy density of a lithium battery adopting the anode interlayer may decrease, and the cycle characteristics thereof may be difficult to improve. A charge capacity of the cathode active material layer may be obtained by multiplying a charge capacity density (mAh/g) of a cathode active material by a mass of the cathode active material in the cathode active material layer. If various types of cathode active materials are used, a value of charge capacity density×mass may be calculated for each cathode active material, and the sum of the values may be the charge capacity of the cathode active material layer. The charge capacity of the anode interlayer may also be calculated in the same way. For example, the charge capacity of the anode interlayer may be obtained by multiplying a charge capacity density (mAh/g) of the anode active material by a mass of the anode active material in the anode interlayer. If various types of anode active materials are used, a value of charge capacity density×mass may be calculated for each anode active material, and the sum of the values may be the charge capacity of the anode interlayer. The charge capacity densities of the cathode active material and the anode active material may be capacities estimated by using an all-solid half-cell using a lithium metal as a counter electrode. The charge capacities of the cathode active material layer and the anode interlayer layer may be directly measured by measuring charge capacity by using an all-solid half-cell. If the measured charge capacity is divided by a mass of each active material, a charge capacity density may be obtained. In other embodiments, the charge capacities of the cathode active material layer and the anode interlayer may be initial charge capacities measured during charging of a first cycle.

[Anode: Lithium metal layer]

The anode may further include a lithium metal layer which includes a lithium metal or a lithium alloy and is between the anode current collector and the electrodeposition induction layer.

The lithium metal layer may include, e.g., lithium foil, a lithium powder, plated lithium, a carbon material, or a combination thereof. An anode active material layer including lithium foil may be, e.g., the lithium metal layer. An anode active material layer including a lithium powder may be introduced by coating an anode current collector with a slurry including a lithium powder, a binder, and the like. The binder may be, e.g., a fluorine-based binder such as PVDF. The anode active material layer may not include a carbon-based anode active material.

[Cathode]

A cathode may include a cathode active material, a conductive material, and a binder. A cathode active material, a conductive material, and a binder may be mixed to prepare a cathode active material composition, and then the prepared cathode active material composition may be directly applied onto an aluminum current collector and dried to prepare the cathode. In other embodiments, the cathode active material composition may be cast on a separate support, and then a film obtained by being peeled off of the support may be laminated on the aluminum current collector to prepare a cathode plate on which a cathode active material layer may be formed.

As the cathode active material, any material, which is a lithium-containing metal oxide and is suitable, may be used without limitation. At least one composite oxide of lithium and a metal, e.g., cobalt, manganese, nickel, or a combination thereof may be used, and, e.g., may include a compound represented by one of the following formulae: $Li_aA_{1-b}B_bD_2$, wherein $0.90 \le a \le 1$ and $0 \le b \le 0.5$; $Li_aE_{1-b}B_bO_{2-c}D_c$, wherein $0.90 \le a \le 1$, $0 \le b \le 0.5$, and $0 \le c \le 0.05$, $LiE_{2-b}B_bO_{4-c}D_c$, wherein $0 \le b \le 0.5$ and $0 \le c \le 0.05$; $Li_aNi_{1-b-c}Co_bB_cD_\alpha$, wherein $0.90 \le a \le 1$, $0 \le b \le 0.5$, $0 \le c \le 0.05$, and $0 < a \le 2$; $Li_aNi_{1-b-c}Co_bB_cO_{2-a}F_\alpha$, wherein $0.90 \le a \le 1$, $0 \le b \le 0.5$, $0 \le c \le 0.05$, and $0 < a \le 2$; $Li_aNi_{1-b-c}Co_bB_cO_{2-\alpha}F_2$, wherein $0.90 \le a \le 1$, $0 \le b \le 0.5$, $0 \le c \le 0.05$, and $0 < a \le 2$; $Li_aNi_{1-b-c}Mn_bB_cD_a$, wherein $90 \le a \le 1$, $0 \le b \le 0.5$, $0 \le c \le 0.05$, and $0 < a \le 2$; $Li_aNi_{1-b-c}Mn_bB_cO_{2-\alpha}F_\alpha$, wherein $0.90 \le a \le 1$, $0 \le b \le 0.5$, $0 \le c \le 0.05$, and $0 < a \le 2$; $Li_aNi_{1-b-c}Mn_bB_cO_{2-\alpha}F_2$, wherein $0.90 \le a \le 1$, $0 \le b \le 0.5$, $0 \le c \le 0.05$, and $0 < a \le 2$; $Li_aNi_bE_cG_dO_2$, wherein $0.90 \le a \le 1$, $0 \le b \le 0.9$, $0 \le c \le 0.5$, and $0.001 \le d \le 0.1$; $Li_aNi_bCo_cMn_dG_eO_2$, wherein $0.90 \le a \le 1$, $0 \le b \le 0.9$, $0 \le c \le 0.5$, $0 \le d \le 0.5$, and $0.001 \le e \le 0.1$; $Li_aNiG_bO_2$, wherein $0.90 < a < 1$ and $0.001 \le b \le 0.1$; $Li_aCoG_bO_2$, wherein $0.90 < a < 1$ and $0.001 \le b \le 0.1$; $Li_aMnG_bO_2$, wherein $0.90 \le a \le 1$ and $0.001 \le b \le 0.1$; $Li_aMn_2GbO_4$, wherein $0.90 \le a \le 1$ and $0.001 \le b \le 0.1$; $QO_2$; $QS_2$; $LiQS_2$; $V_2O_5$; $LiV_2O_5$; $LiIO_2$; $LiNiVO_4$; $Li_{(3-f)}J_2(PO_4)_3$, wherein $0 \le f \le 2$; $Li_{(3-f)}Fe_2(PO_4)_3$, wherein $0 \le f \le 2$; or $LiFePO_4$.

In the formulae representing the above-described compounds, A may be, e.g., Ni, Co, Mn, or a combination

thereof, B may be, e.g., Al, Ni, Co, Mn, Cr, Fe, Mg, Sr, V, a rare earth element, or a combination thereof, D may be, e.g., O, F, S, P, or a combination thereof, E may be, e.g., Co, Mn, or a combination thereof, F may be, e.g., F, S, P, or a combination thereof, G may be, e.g., Al, Cr, Mn, Fe, Mg, La, Ce, Sr, V, or a combination thereof, Q may be, e.g., Ti, Mo, Mn, or a combination thereof, I may be, e.g., Cr, V, Fe, Sc, Y, or a combination thereof, and J may be, e.g., V, Cr, Mn, Co, Ni, Cu, or a combination thereof. A compound in which a coating layer is added to a surface of the above compound may also be used, and a mixture of the above compound and a compound in which a coating layer is added may also be used. The coating layer added to the surface of the above compound may include, e.g., a coating element compound of an oxide or a hydroxide of a coating element, an oxyhydroxide of a coating element, an oxycarbonate of a coating element, or a hydroxycarbonate of a coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of providing the coating layer may be selected within a range that does not adversely affect the physical properties of the cathode active material. A coating method may include, e.g., spray coating, dipping, or the like.

The cathode active material may include, e.g., $Li_aNi_xCo_yM_zO_{2-b}A_b$, wherein $1.0 \leq a \leq 1.2$, $0 \leq b \leq 0.2$, $0.8 \leq x < 1$, $0 < y < 0.3$, $0 < z < 0.3$, $x+y+z=1$, M may be, e.g., manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be, e.g., F, S, Cl, Br, or a combination thereof; $LiNi_xCo_yMn_zO_2$, wherein $0.8 \leq x \leq 0.95$, $0 < y < 0.2$, $0 < z < 0.2$, and $x+y+z=1$; $LiNi_xCo_yAl_zO_2$, wherein $0.8 \leq x \leq 0.95$, $0 < y < 0.2$, $0 < z < 0.2$, and $x+y+z=1$; $LiNi_xCo_yMn_zAl_wO_2$, wherein $0.8 \leq x \leq 0.95$, $0 < y < 0.2$, $0 < z < 0.2$, $0 < w < 0.2$, and $x+y+z+w=1$; $Li_aCo_xM_yO_{2-b}A_b$, wherein $1.0 \leq a \leq 1.2$, $0 \leq b \leq 0.2$, $0.9 \leq x \leq 1$, $0 \leq y \leq 0.1$, $x+y=1$, M may be, e.g., manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof, and A may be, e.g., F, S, Cl, Br, or a combination thereof; $Li_aNi_xMn_yM'_zO_{2-b}A_b$, wherein $1.0 \leq a \leq 1.2$, $0 \leq b \leq 0.2$, $0 < x \leq 0.3$, $0.5 \leq y < 1$, $0 < z \leq 0.3$, $x+y+z=1$, M' may be, e.g., cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be, e.g., F, S, Cl, Br, or a combination thereof; $Li_aM1_xM2_yPO_{4-b}X_b$, wherein $0.90 \leq a \leq 1.1$, $0 \leq x \leq 0.9$, $0 \leq y \leq 0.5$, $0.9 < x+y < 1.1$, $0 \leq b \leq 2$, M1 may be, e.g., chromium (Cr), manganese (Mn), iron (Fe), cobalt (Co), nickel (Ni), copper (Cu), zirconium (Zr), or a combination thereof, M2 may be, e.g., magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be, e.g., O, F, S, P, or a combination thereof; or $Li_aM3_zPO_4$, wherein $0.90 \leq a \leq 1.1$, $0.9 \leq z \leq 1.1$, and M3 may be, e.g., chromium (Cr), manganese (Mn), iron (Fe), cobalt (Co), nickel (Ni), copper (Cu), zirconium (Zr), or a combination thereof.

Examples of the conductive material may include CB, graphite particles, natural graphite, artificial graphite, AB, KB, or a carbon fiber; carbon nanotubes; a metal powder, a metal fiber, or a metal tube of copper, nickel, aluminum, or silver; and a conductive polymer, e.g., a polyphenylene derivative. Any suitable material may be used. The cathode may not include, e.g., a separate conductive material.

Examples of the binder may include a vinylidene fluoride/hexafluoropropylene copolymer, PVDF, PAN, polymethyl methacrylate, PTFE, a mixture of the above polymers, an SBR polymer, or the like. Examples of the solvent may include N-methylpyrrolidone (NMP), acetone, water, or the like. Any suitable material may be used.

A plasticizer or a pore former may be further added to a cathode active material composition to form pores in an cathode plate.

Contents of the cathode active material, the conductive material, the binder, and the solvent used in the cathode may be at levels commonly used in a lithium battery. According to the use and configuration of a lithium battery, one or more of the conductive material, the binder, and the solvent may be omitted.

The content of the binder included in the cathode may be, e.g., in a range of about 0.1 wt% to about 10 wt% or about 0.1 wt% to about 5 wt% with respect to the total weight of the cathode active material layer. The content of the cathode active material included in the cathode may be, e.g., in a range of about 80 wt% to about 99 wt%, about 90 wt% to about 99 wt%, or about 95 wt% to about 99 wt% with respect to the total weight of the cathode active material layer.

[Separator]

According to embodiments, a separator may be inserted between the cathode and the anode.

As the separator, a suitable separator used in lithium batteries may be used. A separator having low resistance to the movement of ions in an electrolyte and an excellent electrolyte impregnation ability may be used. The separator may include, e.g., glass fiber, polyester, Teflon, PE, PP, PTFE, or a combination thereof and may be in the form of a non-woven fabric or a woven fabric. A windable separator including PE, PP, or the like may be used in a lithium ion battery, and a separator having an excellent electrolyte impregnation ability may be used in a lithium ion polymer battery.

The separator may be prepared through the following exemplary method. The method may be adjusted according to required conditions.

First, a polymer resin, a filler, and a solvent may be mixed to prepare a separator composition. The separator composition may be applied directly onto an electrode and dried to form the separator. The separator composition may be cast on a support, and then a separator film peeled off of the support may be laminated on an electrode to form the separator.

A polymer used for preparing the separator may be a suitable material used in a binding material of an electrode plate. The polymer may include, e.g., a vinylidene fluoride/hexafluoropropylene copolymer, PVDF, PAN, polymethyl methacrylate, or a mixture thereof.

[Battery case]

According to embodiments, a lithium battery including the electrode structure 100 described above may be inserted into the battery case.

The battery case may have, e.g., a pouch shape, a prismatic shape, or a cylindrical shape.

The battery case may include a polyolefin resin or a metal. The polyolefin resin may include, e.g., a PP resin or a PE resin. The metal may include, e.g., aluminum or an aluminum alloy.

[Electrolyte]

According to embodiments, the lithium battery may further include an electrolyte injected into the battery case. The lithium battery may further include an electrolyte between the electrode structure 100 and an electrode.

The electrolyte may be, e.g., a liquid electrolyte, a solid electrolyte, a gel electrolyte, or a combination thereof.

The electrolyte may be, e.g., an organic electrolyte. A lithium salt may be dissolved in an organic solvent to prepare the organic electrolyte.

As the organic solvent, any suitable material may be. Examples of the organic solvent may include propylene carbonate (PC), ethylene carbonate (EC), fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the lithium salt, any suitable material used as a lithium salt may be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+i}SO_2)$, wherein $1 \leq x \leq 20$ and $1 \leq y \leq 20$, LiCl, LiI, or a mixture thereof. A concentration of the lithium salt may be, e.g., in a range of about 0.1 M to about 5.0 M.

The solid electrolyte may be, e.g., an oxide solid electrolyte, a sulfide solid electrolyte, a polymer solid electrolyte, or a combination thereof.

The solid electrolyte may be, e.g., an oxide solid electrolyte. The oxide solid electrolyte may include, e.g., $Li_{1+x+y}Al_xTi_{2-x}Si_yP_{3-y}O_{12}$, wherein $0<x<2$ and $0 \leq y<3$), $BaTiO_3$, $Pb(Zr,Ti)O_3$ (PZT), $Pb_{1-x}La_xZr_{1-y}Ti_yO_3$ (PLZT), wherein $0 \leq x<1$ and $0 \leq y<1$, $Pb(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$, wherein $0<x<2$ and $0<y<3$, $Li_xAl_yTi_z(PO_4)_3$, wherein $0<x<2$, $0<y<1$, and $0<z<3$, $Li_{1+x+y}(Al, Ga)_x(Ti, Ge)_{2-x}Si_yP_{3-y}O_{12}$, wherein $0 \leq x \leq 1$ and $0 \leq y \leq 1$, $Li_xLa_yTiO_3$, wherein $0<x<2$ and $0<y<3$, $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$, wherein M may be, e.g., Te, Nb, or Zr, and x may be an integer of 1 to 10. The solid electrolyte may be prepared through sintering or the like. The oxide solid electrolyte may be a garnet-type solid electrode, e.g., $Li_7La_3Zr_2O_{12}$ (LLZO) and $Li_{3+x}L_{a3}Zr_{2-a}M_aO_{12}$ (LLZO doped with M), wherein M may be, e.g., Ga, W, Nb, Ta, or Al, and x is an integer of 1 to 10, $0<a<2$.

The sulfide solid electrolyte may include, e.g., lithium sulfide, silicon sulfide, phosphorus sulfide, germanium sulfide, boron sulfide, or a combination thereof. Sulfide solid electrolyte particles may include, e.g., $Li_2S$, $P_2S_5$, $SiS_2$, $GeS_2$, $B_2S_3$, or a combination thereof. The sulfide solid electrolyte particles may include, e.g., $Li_2S$ or $P_2S_5$. The sulfide solid electrolyte particles are known to have higher lithium ion conductivity than other inorganic compounds. The sulfide solid electrolyte may include, e.g., $Li_2S$ and $P_2S_5$. If the sulfide solid electrolyte material constituting the sulfide solid electrolyte includes $Li_2S$-$P_2S_5$, a mixing molar ratio of $Li_2S$ to $P_2S_5$ may be, e.g., in a range of about 50:50 to about 90:10. An inorganic solid electrolyte, which is prepared by adding $Li_3PO_4$, a halogen, a halogen compound, $Li_{2+2x}Zn_{1-x}GeO_4$ ("LISICON"), wherein $0 \leq x<1$, $Li_{3+y}PO_{4-x}N_x$ (LIPON), wherein $0<x<4$ and $0<y<3$, $Li_{3.25}Ge_{0.25}P_{0.75}S_4$("Thio LISICON"), $Li_2O$-$Al_2O_3$-$TiO_2$-$P_2O_5$ "(LATP"), or the like to $Li_2S$-$P_2S_5$, $SiS_2$, $GeS_2$, $B_2S_3$, or a combination, may be used as the sulfide solid electrolyte. Examples of the sulfide solid electrolyte material may include $Li_2S$-$P_2S_5$; $Li_2S$-$P_2S_5$-LiX, wherein X may be, e.g., a halogen element; $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$, wherein $0<m<10$, $0<n<10$, and Z=Ge, Zn, or Ga; $Li_2S$-$GeS_2$; $Li_2S$-$SiS_2$-$Li_3PO_4$; and $Li_2S$-$SiS_2$-$Li_pMO_q$, wherein $0<p<10$,

0<q<10, and M=P, Si, Ge, B, Al, Ga, or In. In this regard, a sulfide solid electrolyte material may be prepared by treating a raw starting material (e.g., $Li_2S$ or $P_2S_5$) of the sulfide solid electrolyte material through melt quenching, mechanical milling, or the like. A calcination process may be performed after the treating of the raw starting material of the sulfide solid electrolyte material. The sulfide solid electrolyte may be in an amorphous state, a crystalline state, or a mixture state thereof.

The polymer solid electrolyte may be, e.g., an electrolyte including a mixture of a lithium salt and a polymer or may include a polymer having an ion-conductive functional group. The polymer solid electrolyte may be, e.g., a polymer electrolyte that does not include a liquid electrolyte. A polymer included in the polymer solid electrolyte may include, e.g., PEO, PVDF, PVDF-HFP, PEO, a poly(styrene-b-ethylene oxide) (PS-PEO) block copolymer, poly(styrene-butadiene), poly(styrene-isoprene-styrene), a poly(styrene-b-divinylbenzene) block copolymer, a poly(styrene-ethylene oxide-styrene) block copolymer, PSS, PVF, PMMA, PEG, PAN, polytetrafluoroethylene (PTFE), PEDOT, PPY, PAN, polyaniline, poly acetylene, Nafion™, Aquivion®, Flemion®, Gore™, Aciplex™, Morgane®-ADP, SPEEK, SPAEKKS, SPAEK, SPBIB, PSS, $DPASLi^+$, or a combination thereof. A material suitable for use in a polymer electrolyte may be used. As the lithium salt, a suitable material usable as a lithium salt may be used. The lithium salt may include, e.g., $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+i}SO_2)(C_yF_{2y+i}SO_2)$, wherein x and y may each be a natural number of 1 to 20, LiCl, LiI, or a mixture thereof.

The gel electrolyte may be, e.g., a gel polymer electrolyte. The gel polymer electrolyte may be, e.g., an electrolyte including a liquid electrolyte and a polymer or including an organic solvent and a polymer having an ion-conductive functional group. The liquid electrolyte may include, e.g., a mixture of an ionic liquid, a lithium salt, and an organic solvent, a mixture of an ionic liquid and an organic solvent, or a mixture of a lithium salt and an ionic liquid or an organic solvent. The polymer may be, e.g., a polymer suitable for use in a solid polymer electrolyte. The organic solvent may be, e.g., an organic solvent suitable for use in a liquid electrolyte. The lithium salt may be, e.g., a lithium salt suitable for use in a solid polymer electrolyte. The ionic liquid may refer to a salt in a liquid state at room temperature or a room-temperature molten salt that has a melting point at room temperature or less and consists of only ions. The ionic liquid may include, e.g., a compound including a) at least one cation, e.g., an ammonium cation, a pyrrolidinium cation, pyridinium cation, a pyrimidinium cation, an imidazolium cation, a piperidinium cation, a pyrazolium cation, an oxazolium cation, a pyridazinium cation, a phosphonium cation, a sulfonium cation, a triazolium cation, and a mixture thereof, and b) at least one anion, e.g., $BF_4$-, $PF_6$-, $AsF_6$-, $SbF_6$-, $AlCl_4$-, $HSO_4$-, $ClO_4$-, $CH_3SO_3$-, $CF_3CO_2$-, Cl-, Br-, I-, $BF_4$-, $SO_4$-, $CF_3SO_3$-, $(FSO_2)_2N$-, $(C_2F_5SO_2)_2N$-, $(C_2F_5SO_2)(CF_3SO_2)N$-, or $(CF_3SO_2)_2N$-. The polymer solid electrolyte may be impregnated in the electrolyte in the lithium battery to form the gel polymer electrolyte. The gel electrolyte may further include inorganic particles.

(Lithium battery)

The lithium battery may be, e.g., a lithium primary battery, a lithium secondary battery, a lithium-sulfur battery, a lithium-air battery.

The lithium battery may be manufactured through the following exemplary method or a method may be adjusted according to required conditions.

Referring to FIG. 4, a lithium battery 1 according to embodiments may include a cathode 3, an anode 2 described above, and a separator 4. The separator 4 may be between the cathode 3 and the anode 2, and the cathode 3, the anode 2, and the separator 4 may be wound or folded to form a battery structure 7. The formed battery structure 7 may be accommodated in a battery case 5. A first lead electrode 9 serving as an electrical path for guiding a current generated in the battery structure 7 to the outside may be attached to the cathode 3 or the anode 2. The first lead electrode 9 may be attached to the cathode 3 or the anode 2 by using the above-described adhesive. The lithium battery 1 may include a second lead electrode 8 serving as an electrical path for guiding a current formed in the battery structure 7 to the outside. The second lead electrode 8 may be attached to the first lead electrode 9 by using the above-described adhesive. An organic electrolyte may be injected into the battery case 5, and the battery case 5 may be sealed to complete the lithium battery 1. The battery case 5 may have a prismatic shape. The battery case 5 may have a cylindrical shape, a thin film shape, or the like.

Referring to FIG. 5, a lithium battery 1 according to embodiments may include a cathode 3, the above-described anode 2, and a separator 4. The separator 4 may be between the cathode 3 and the anode 2 to form a battery structure 7. The battery structure 7 may be stacked in a bi-cell structure and then accommodated in a battery case 5. A first lead electrode 9 serving as an electrical path for guiding a current generated in the battery structure 7 to the outside may be attached to the cathode 3 or the anode 2. The first lead electrode 9 may be attached to the cathode 3 or the anode 2 by using the above-described adhesive. The lithium battery 1 may include a second lead electrode 8 serving as an electrical path for guiding a current formed in the battery structure 7 to the outside. The second lead electrode 8 may be attached to the first lead electrode 9 by using the above-described adhesive. An organic electrolyte may be injected into the battery case 5, and the battery case 5 may be sealed to complete the lithium battery 1. The battery case 5 may

have a prismatic shape. The battery case 5 may have a cylindrical shape, a thin film shape, or the like.

A pouch-type lithium battery may correspond to a case in which a pouch is used as a battery case in each of the lithium batteries of FIGS. 4 and 5. The pouch-type lithium battery may include one or more battery structures. A separator may be between a cathode and an anode to form the battery structure. After the battery structure is stacked in a bi-cell structure, the battery structure may be impregnated with an organic electrolyte, accommodated in a pouch and sealed to complete the pouch-type lithium battery. The first lead electrode 9 may be attached to the cathode 3 or the anode 2 by using the above-described adhesive, and the second lead electrode 8 may be attached to the first lead electrode 9 by using the above-described adhesive. The above-described cathode, anode, and separator may be stacked and accommodated in a pouch in the form of an electrode structure or may be wound or folded into a jelly roll-shaped electrode structure and then accommodated in a pouch. Subsequently, an organic electrolyte may be injected into the pouch, and the pouch may be sealed to complete a lithium battery.

A lithium battery may have excellent lifespan characteristics and high-rate characteristics and thus may be used, e.g., in electric vehicles (EVs). The lithium battery may be used in hybrid vehicles such as plug-in hybrid electric vehicles (PHEVs). The lithium battery may be used in fields in which large amounts of power are required to be stored. The lithium battery may be used in electric bicycles, power tools, or the like.

A plurality of lithium batteries may be stacked to form a battery module, and a plurality of battery modules may form a battery pack. The battery pack may be used in all devices requiring high capacity and high output power. The battery pack may be used in laptops, smartphones, electric vehicles, and the like. A battery module may include, e.g., a plurality of batteries and a frame for holding the plurality of batteries. A battery pack may include, e.g., a plurality of battery modules and a busbar for connecting the plurality of battery modules. The battery module or the battery pack may further include a cooling device. A plurality of battery packs may be controlled by a battery management system. The battery management system may include a battery pack and a battery controller connected to the battery pack.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

(Preparation of adhesive)

Preparation Example 1: 1 mol% maleimide-modified polyolefin + aluminum conductive particles

A commercial resin (Mitsui Chemicals, i.e. a maleic anhydride grafted polypropylene obtained by grafting maleic anhydride onto a polyolefin backbone) was purchased and used as anhydric maleic acid-modified PP including a 1 mol% anhydric maleic acid.

The anhydric maleic acid was hydrolyzed into a maleic acid during storage of the corresponding resin, and thus a maleic acid structure was heat-treated at a temperature of 120 °C for 24 hours to be changed into an anhydric maleic acid structure. 30 parts by weight of methyl-cyclohexane which was a dehydrated good solvent was added with respect to 1 part by weight of the corresponding resin, stirred under reflux at a temperature of 100 °C to dissolve the resin, and 0.05 parts by weight of a 5-aminoisophthalic acid was added thereto and stirred for 3 hours.

After a reaction was completed, a reaction solution was added to ethyl alcohol to isolate solid maleimide-modified polyolefin.

Aluminum conductive particles having an average particle diameter of 10 μm were mixed with the prepared 1 mol% maleimide-modified PP such that an amount of conductive particles was 1000 pcs/mm$^2$ (2.618 vol%), thereby preparing an adhesive.

Preparation Example 2: 5 mol% maleimide-modified polyolefin + aluminum conductive particles

An adhesive was prepared in the same manner as in Preparation Example 1, except that, unlike Preparation Example 1, anhydric maleic acid-modified PP including an anhydric maleic acid at a content of 5 mol% was used instead of anhydric maleic acid-modified PP including an anhydric maleic acid at a content of 1 mol%.

Preparation Example 3: 1 mol% maleimide-modified polyolefin + copper conductive particles

An adhesive was prepared in the same manner as in Preparation Example 1, except that, unlike Preparation Example 1, copper conductive particles having an average particle diameter of 10 μm were used instead of aluminum conductive particles having an average particle diameter of 10 μm.

Preparation Example 4: 1 mol% maleimide-modified polyolefin + nickel conductive particles

An adhesive was prepared in the same manner as in Preparation Example 1, except that, unlike Preparation Example 1, nickel conductive particles having an average particle diameter of 10 μm were used instead of aluminum conductive particles having an average particle diameter of 10 μm.

Preparation Example 5: 1 mol% maleimide-modified polyolefin + aluminum conductive particles

An adhesive was manufactured in the same manner as in Preparation Example 1, except that, unlike Preparation Example 1, an amount of aluminum conductive particles having an average particle diameter of 10 μm was adjusted to 2,000 pcs/$mm^2$ (5.236 vol%).

Preparation Example 6: 1 mol% maleimide-modified polyolefin + aluminum conductive particles

An adhesive was manufactured in the same manner as in Preparation Example 1, except that an amount of aluminum conductive particles having an average particle diameter of 10 μm was adjusted to 35,000 pcs/$mm^2$ (9.163 vol%) as compared with Preparation Example 1.

Preparation Example 7: 1 mol% maleimide-modified polyolefin + aluminum conductive particles

An adhesive was manufactured in the same manner as in Preparation Example 1, except that, unlike Preparation Example 1, an amount of aluminum conductive particles having an average particle diameter of 10 μm was adjusted to 500 pcs/$mm^2$ (1.309 vol%).

Preparation Example 8: 1 mol% maleimide-modified polyolefin + aluminum conductive particles

An adhesive was manufactured in the same manner as in Preparation Example 1, except that, unlike Preparation Example 1, an amount of aluminum conductive particles having an average particle diameter of 10 μm was adjusted to 200 pcs/$mm^2$ (0.524 vol%).

Preparation Example 9: 1 mol% maleimide-modified polyolefin + aluminum conductive particles

An adhesive was manufactured in the same manner as in Preparation Example 1, except that, unlike Preparation Example 1, instead of aluminum conductive particles having an average particle diameter of 10 μm, an amount of aluminum conductive particles having an average particle diameter of 1 μm was adjusted to 100,000 pcs/$mm^2$ (0.262 vol%).

Preparation Example 10: 1 mol% maleimide-modified polyolefin + aluminum conductive particles

An adhesive was manufactured in the same manner as in Preparation Example 1, except that, unlike Preparation Example 1, instead of aluminum conductive particles having an average particle diameter of 10 μm, an amount of aluminum conductive particles having an average particle diameter of 5 μm was adjusted to 10,000 pcs/$mm^2$ (3.272 vol%).

Preparation Example 11: 1 mol% maleimide-modified polyolefin + aluminum conductive particles

An adhesive was manufactured in the same manner as in Preparation Example 1, except that unlike Preparation Example 1, instead of aluminum conductive particles having an average particle diameter of 10 μm, an amount of aluminum conductive particles having an average particle diameter of 20 μm was adjusted to 400 pcs/$mm^2$ (8.378 vol%).

Preparation Example 12: 1 mol% maleimide-modified polyolefin + aluminum conductive particles

An adhesive was manufactured in the same manner as in Preparation Example 1, except that, unlike Preparation Example 1, instead of aluminum conductive particles having an average particle diameter of 10 μm, an amount of aluminum conductive particles having an average particle diameter of 30 μm was adjusted to 150 pcs/$mm^2$ (10.603 vol%).

Comparative Preparation Example 1: PVDF-HFP (6 wt%) + aluminum conductive particles

An adhesive was prepared in the same manner as in Preparation Example 1, except that, unlike Preparation

Example 1, PVDF-HFP (6 wt%) was used instead of 1 mol% maleimide-modified polyolefin.

Comparative Preparation Example 2: Ethylene vinyl acetate (EVA) (VA20wt%) + aluminum conductive particles

An adhesive was prepared in the same manner as in Preparation Example 1, except that, unlike Preparation Example 1, EVA (VA20wt%) was used instead of 1 mol% maleimide-modified polyolefin.

Comparative Preparation Example 3: EVA (15 wt%) + aluminum conductive particles

An adhesive was prepared in the same manner as in Preparation Example 1, except that EVA (VA15wt%) was used instead of 1 mol% maleimide-modified polyolefin.

Comparative Manufacturing Preparation 4: EVA (VA10wt%) + aluminum conductive particles

An adhesive was prepared in the same manner as in Preparation Example 1, except that, unlike Preparation Example 1, EVA (VA10wt%) was used instead of 1 mol% maleimide-modified polyolefin.

Comparative Preparation Example 5: PP + aluminum conductive particles

An adhesive was prepared in the same manner as in Preparation Example 1, except that, unlike Preparation Example 1, PP was used instead of 1 mol% maleimide-modified polyolefin.

Evaluation Example 1: Measurement of weight average molecular weight (g/mol) and melting point (°C) of adhesive

A weight average molecular weight of each of resins according to Preparation Examples 1 to 9 and Comparative Preparation Examples 1 to 5 was measured. The weight average molecular weight was measured through GPC. Measurement results are shown in Table 1 below.

For example, a melting point of each of the resins according to Preparation Examples 1 to 9 and Comparative Preparation Examples 1 to 5 was measured by using differential scanning calorimetry (DSC).

For example, the temperature was raised at a rate of 10 °C/min under a nitrogen atmosphere, cooled, and then raised again at a rate of 10 °C/min. An endothermic peak value was measured as melting points during a second temperature rise and is shown in Table 1 below.

[Table 1]

| Classification | Adhesive | | | | Weight average molecular weight (× $10^4$ g/mol) | Melting point (°C) |
|---|---|---|---|---|---|---|
| | Conductive particles | | | Binder | | |
| | Type | average particle diameter (μm) | Particle amount (vol%) | | | |
| Preparation Example 1 | Al | 10 | 2.618 | 1 mol% maleimide-modified propylene | 30 | 91 |
| Preparation Example 2 | Al | 10 | 2.618 | 5 mol% maleimide-modified PP | 34 | 82 |
| Preparation Example 3 | Cu | 10 | 2.618 | 1 mol% maleimide-modified polyolefin | 30 | 91 |
| Preparation Example 4 | Ni | 10 | 2.618 | 1 mol% maleimide-modified polyolefin | 30 | 91 |
| Preparation Example 5 | Al | 10 | 5.236 | 1 mol% maleimide-modified polyolefin | 30 | 91 |
| Preparation Example 6 | Al | 10 | 9.163 | 1 mol% maleimide-modified polyolefin | 30 | 91 |
| Preparation Example 7 | Al | 10 | 1.309 | 1 mol% maleimide-modified polyolefin | 30 | 91 |

(continued)

| Classification | Adhesive | | | | Weight average molecular weight ($\times 10^4$ g/mol) | Melting point (°C) |
|---|---|---|---|---|---|---|
| | Conductive particles | | | Binder | | |
| | Type | average particle diameter (μm) | Particle amount (vol%) | | | |
| Preparation Example 8 | Al | 10 | 0.524 | 1 mol% maleimide-modified polyolefin | 30 | 91 |
| Preparation Example 9 | Al | 1 | 0.262 | 1 mol% maleimide-modified polyolefin | 30 | 91 |
| Preparation Example 10 | Al | 5 | 3.272 | 1 mol% maleimide-modified polyolefin | 30 | 91 |
| Preparation Example 11 | Al | 20 | 8.378 | 1 mol% maleimide-modified polyolefin | 30 | 91 |
| Preparation Example 12 | Al | 30 | 10.603 | 1 mol% maleimide-modified polyolefin | 30 | 91 |
| Comparative Preparation Example 1 | Al | 10 | 2.618 | PVDF-HFP (6 wt%) | 12 | 133 |
| Comparative Preparation Example 2 | Al | 10 | 2.618 | EVA (VA20wt%) | 40 | 83 |
| Comparative Preparation Example 3 | Al | 10 | 2.618 | EVA (VA15wt%) | 28 | 89 |
| Comparative Preparation Example 4 | Al | 10 | 2.618 | EVA (VA10wt%) | 52 | 95 |
| Comparative Preparation Example 5 | Al | 10 | 2.618 | PP | 70 | 165 |

(Manufacturing of anode and lithium battery)

Example 1: Adhesive according to Preparation Example 1

(Manufacturing of lithium batteries)

$LiNi_{0.6}Co_{0.2}Al_{0.2}O_2$, a conductive agent (Super-P manufactured by TIMCAL Graphite and Carbon), a binder (PVDF manufactured by Solvay S.A), and NMP were mixed to obtain a cathode composition. The cathode composition was applied onto aluminum foil (thickness of about 10 μm) and dried at a temperature of 50 °C, and the dried result was dried in a vacuum at a temperature of about 120 °C to prepare a cathode. Thereafter, the adhesive according to Preparation Example 1 was applied onto an adhesive application area with a width of 2 mm and a length of 6 mm, onto which the cathode composition was not applied in the aluminum foil. Afterwards, an aluminum metal (first lead metal) with a width of 6 mm and a thickness of 0.1 mm was disposed on the adhesive application area and then heat-fused at a temperature of 200 °C and a pressure of 3 Mpa for 6 seconds to attach the first lead metal to the aluminum foil, thereby preparing a cathode structure.

APP separator (Celgard 3510, 20 μm) was positioned between the cathode structure obtained through such a process and a copper (Cu) current collector with a thickness of 10 μm, thereby preparing a battery structure.

The adhesive according to Preparation Example 1 was applied onto an outer surface of the battery structure to form an adhesive layer with a thickness of 10 μm. The battery structure coated with the adhesive was inserted into

an aluminum battery case, and then an electrolyte was injected, thereby manufacturing a lithium battery.

As the electrolyte, a solution, in which 1.2 M $LiPF_6$ was dissolved in EC+PC+ethylene glycol dimethyl ether (EP)+PP (volume ratio of 2:2:3:3), was used.

Examples 2 to 12 and Comparative Examples 1 to 5

Lithium batteries were manufactured in the same manner as in Example 1, except that types of adhesives included in adhesive layers were changed as shown in Table 2 below.

Evaluation Example 2: Shear strength

An adhesive force of each of the adhesives according to Examples 1 to 12 and Comparative Examples 1 to 5 was measured according to the ISO 4587:1995 standard test method.

A specimen, in which the adhesive layer was stacked between a cathode current collector and a first lead electrode to have a thickness of 10 μm, was prepared to have a width of 15 mm. A distance between a chuck and a jig was maintained to be 50 mm, and a shear strength test was performed at a speed of 100 mm/min.

The above-described specimen was immersed in a solution, in which 1.2M $LiPF_6$ was dissolved in EC+PC+EP+PP (volume ratio of 2:2:3:3), at a temperature of 60 °C for 24 hours, and then the shear strength test was performed at a speed of 100 mm/min. Measurement results are shown in Table 2 below.

Evaluation Example 3: Direct Current Internal Resistance (DC-IR) evaluation

Among the lithium batteries manufactured in Examples 1 to 12 and Comparative Examples 1 to 5, direct current internal resistance (DC-IR) was measured on the batteries before injection of an electrolyte and the batteries after injection of an electrolyte through the following method.

At a $1^{st}$ cycle, the lithium batteries were charged at a current of 0.5 C up to a voltage of a state of charge (SOC) 50% to then cut off the charging at 0.02 C, and then rested for 10 minutes. Next, the lithium batteries were discharged at a constant current of 0.5 C for 30 seconds and then rested for 30 seconds. Thereafter, the lithium batteries were charged at a constant current of 0.5 C for 30 seconds, rested for 10 minutes, discharged at a constant current of 1.0 C for 30 seconds, rested for 30 seconds, and then charged at a constant current of 0.5 C for 1 minute. Afterwards, the lithium batteries were rested for 10 minutes, discharged at a constant current of 2.0 C for 30 seconds, and then rested for 30 seconds. Then, the lithium batteries were charged at a constant current of 0.5 C for 2 minutes, rested for 10 minutes, discharged at a constant current of 3.0 C for 30 seconds, and then rested for 30 seconds. Subsequently, the lithium batteries were charged at a constant current of 0.5 C for 2 minutes and rested for 10 minutes.

An average voltage drop value for 30 seconds for each C-rate is a DC voltage value.

Among the lithium batteries manufactured in Examples 1 to 12 and Comparative Examples 1 to 5, measurement results for the batteries before the injection of the electrolyte and after the injection of the electrolyte are shown in Table 2 below.

[Table 2]

| | Adhesive | Before injection of electrolyte | | After injection of electrolyte | |
|---|---|---|---|---|---|
| | | DC-IR (Ω) | Shear strength (gf) | DC-IR (Ω) | Shear strength (gf) |
| Example 1 | Manufacturing Example 1 | 11.6 | 8.0 | 12.5 | 7.5 |
| Example 2 | Manufacturing Example 2 | 10.8 | 8.3 | 12.0 | 7.4 |
| Example 3 | Manufacturing Example 3 | 10.1 | 7.9 | 11.1 | 7.5 |
| Example 4 | Manufacturing Example 4 | 13.9 | 8.1 | 16.4 | 7.6 |
| Example 5 | Manufacturing Example 5 | 12.5 | 7.8 | 13.8 | 7.3 |
| Example 6 | Manufacturing Example 6 | 13.1 | 7.5 | 14.4 | 7.1 |
| Example 7 | Manufacturing Example 7 | 10.8 | 8.3 | 12.1 | 7.8 |
| Example 8 | Manufacturing Example 8 | 12.7 | 8.4 | 14.1 | 7.9 |

(continued)

| | Adhesive | Before injection of electrolyte | | After injection of electrolyte | |
|---|---|---|---|---|---|
| | | DC-IR (Ω) | Shear strength (gf) | DC-IR (Ω) | Shear strength (gf) |
| Example 9 | Manufacturing Example 9 | 15.5 | 7.2 | 17.6 | 6.8 |
| Example 10 | Manufacturing Example 10 | 13.0 | 7.0 | 15.7 | 6.6 |
| Example 11 | Manufacturing Example 11 | 10.4 | 6.8 | 12.1 | 6.4 |
| Example 12 | Manufacturing Example 12 | 10.5 | 6.5 | 11.9 | 6.1 |
| Comparative Example 1 | Comparative Manufacturing Example 1 | 10.8 | 5.2 | 19.5 | 1.0 |
| Comparative Example 2 | Comparative Manufacturing Example 2 | 10.9 | 6.8 | 18.0 | 3.3 |
| Comparative Example 3 | Comparative Manufacturing Example 3 | 11.1 | 6.6 | 16.2 | 3.5 |
| Comparative Example 4 | Comparative Manufacturing Example 4 | 11.1 | 6.5 | 14.8 | 3.8 |
| Comparative Example 5 | Comparative Manufacturing Example 5 | 11.4 | 7.5 | 11.9 | 6.9 |

As shown in Table 2, the lithium batteries according to Examples 1 to 12 included the adhesives according to Preparation Examples 1 to 12, and thus the resistance and shear strength thereof before and after the injection of the electrolyte were improved.

By way of summation and review, in a case in which an electrode tab is welded to a battery structure, if a battery receives shock due to dropping or the like, the adhesive strength between the electrode tab and the battery structure may be decreased, and during a welding process, a short circuit may occur in a lithium battery due to scattering of metal foreign materials caused by sparks. If an electrode tab and a battery structure are bonded in the presence of an electrolyte, an adhesive may have to bond adherends to each other while absorbing an organic solvent, and thus an adhesive force of the adhesive may be decreased. In this regard, there is a need to develop a technology for an adhesive material of which adhesive strength does not deteriorate even after a drop impact and which has low electrolyte absorption in an electrolyte and has excellent adhesive properties.

According to an embodiment, if an adhesive layer between an electrode current collector and a first lead electrode or between a first lead electrode and second lead electrode includes an adhesive including a maleimide-modified polyolefin that includes two or more acidic functional groups, an adhesive force and high-temperature stability between the battery structure and the battery case may be improved. The adhesive including the maleimide-modified polyolefin that includes two or more acidic functional groups may have improved impact strength and high-temperature stability.

According to an embodiment, an adhesive which includes maleimide-modified polyolefin including two or more acidic functional groups may have improved high-temperature stability, and thus the impact resistance and high-temperature stability of an electrode structure including the adhesive may be improved. The impact strength and high-temperature stability of a lithium battery including the electrode structure may be improved.

One or more embodiments may provide an electrode structure with impact strength and high-temperature stability.

One or more embodiments may provide a lithium battery including the electrode structure.

## Claims

1. An electrode structure (100), comprising:

   an electrode current collector (110) including a coated portion (112) and an uncoated portion (114);
   an electrode active material layer (120) on the coated portion (112) of the electrode current collector (110);
   a first lead electrode (130) on the uncoated portion (114) of the electrode current collector (110);
   a second lead electrode (140) attached to the first lead electrode (130);
   a first adhesive layer (135) between the first lead electrode (130) and the electrode current collector (110) and attaching the first lead electrode (130) to the electrode current collector (110); and

a second adhesive layer (145) between the first lead electrode (130) and the second lead electrode (140) and attaching the second lead electrode (140) to the first lead electrode (130),
wherein at least one of the first adhesive layer (135) and the second adhesive layer (145) includes an adhesive which includes a binder and conductive particles, the binder including maleimide-modified polyolefin which includes two or more acidic functional groups (13).

2. The electrode structure as claimed in claim 1, wherein a solubility parameter of the maleimide-modified polyolefin including two or more acidic functional groups is 7.0 $(cal/cm^3)^{1/2}$ to 9.2 $(cal/cm^3)^{1/2}$ determined according to the description.

3. The electrode structure as claimed in claim 1 or 2, wherein a weight average molecular weight of the maleimide-modified polyolefin including two or more acidic functional groups is 10,000 g/mol to 1,000,000 g/mol measured through gel permeation chromatography (GPC).

4. The electrode structure as claimed in one or more of the preceding claims,
wherein a melting point ($T_m$) of the maleimide-modified polyolefin including two or more acidic functional groups is about 170 °C or less measured using differential scanning calorimetry (DSC).

5. The electrode structure as claimed in one or more of the preceding claims,
wherein the maleimide-modified polyolefin including two or more acidic functional groups is a product of a reaction between an amine compound including two or more acidic functional groups and a dicarboxylic acid anhydride-modified polyolefin.

6. The electrode structure as claimed in claim 5, wherein maleimide of the maleimide-modified polyolefin including two or more acidic functional groups is a product of a dehydration reaction between the amine compound including two or more acidic functional groups and the dicarboxylic acid anhydride-modified polyolefin.

7. The electrode structure as claimed in claim 5, wherein an α,β-unsaturated dicarboxylic acid of the dicarboxylic acid anhydride-modified polyolefin includes an anhydric maleic acid.

8. The electrode structure as claimed in claim 5, wherein a modified polyolefin of the dicarboxylic acid anhydride-modified polyolefin includes polyethylene or polypropylene.

9. The electrode structure as claimed in claim 5, wherein a content of polyolefin in the dicarboxylic acid anhydride-modified polyolefin is 50 mol% or more; And/or wherein a content of dicarboxylic acid anhydride in the α,β-unsaturated dicarboxylic acid anhydride-modified polyolefin is 50 mol% or less.

10. The electrode structure as claimed in claim 5, wherein:

the amine compound including two or more acidic functional groups is represented by Formula 1:

Formula 1

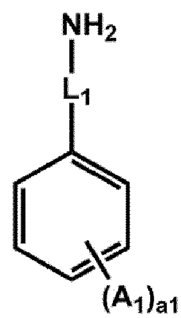

in Formula 1,
$L_1$ is a $C_1$-$C_{20}$ alkylene group, a $C_2$-$C_{20}$ alkenylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group,

A1 is a carboxylic acid group, a sulfonic acid group, or a phosphoric acid group, and
a1 is an integer of 2 to 5.

**11.** The electrode structure as claimed in claim 5, wherein:

the amine compound including two or more acidic functional groups is represented by one of Formulae 1-1 to 1-6:

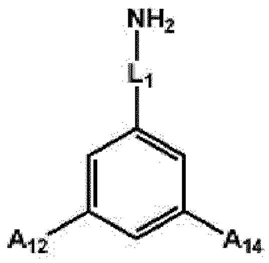
1-1

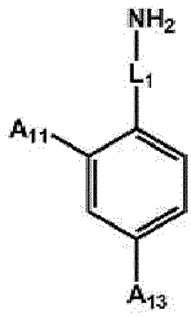
1-2

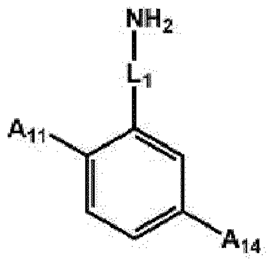
1-3

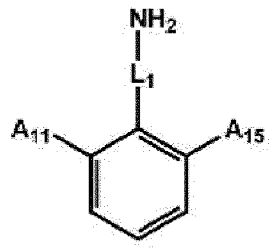
1-4

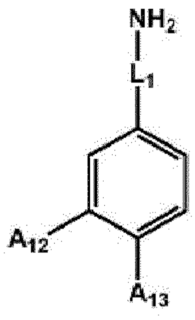
1-5

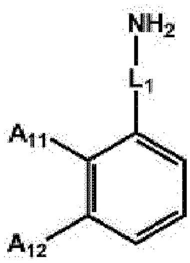
1-6

in Formulae 1-1 to 1-6,
$L_1$ is a $C_1$-$C_{20}$ alkylene group, a $C_2$-$C_{20}$ alkenylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, and
An to $A_{15}$ are each independently a carboxylic acid group, a sulfonic acid group, or a phosphoric acid group.

**12.** The electrode structure as claimed in one or more of the preceding claims, wherein the conductive particles include Al, Cu, Ni, or SUS.

**13.** The electrode structure as claimed in one or more of the preceding claims, wherein an average particle diameter (D50) of the conductive particles is about 1 μm to about 100 μm measured through a laser diffraction method.

**14.** The electrode structure as claimed in one or more of the preceding claims, wherein an amount of the conductive particles in the adhesive is 0.005 vol% to 15 vol% with respect to a total volume of the adhesive.

**15.** A lithium battery (1) comprising:

the electrode structure (100) as claimed in claim 1;
an electrode opposite to the electrode structure; and
a separator (4) between the electrode structure (100) and the electrode.

FIG. 1

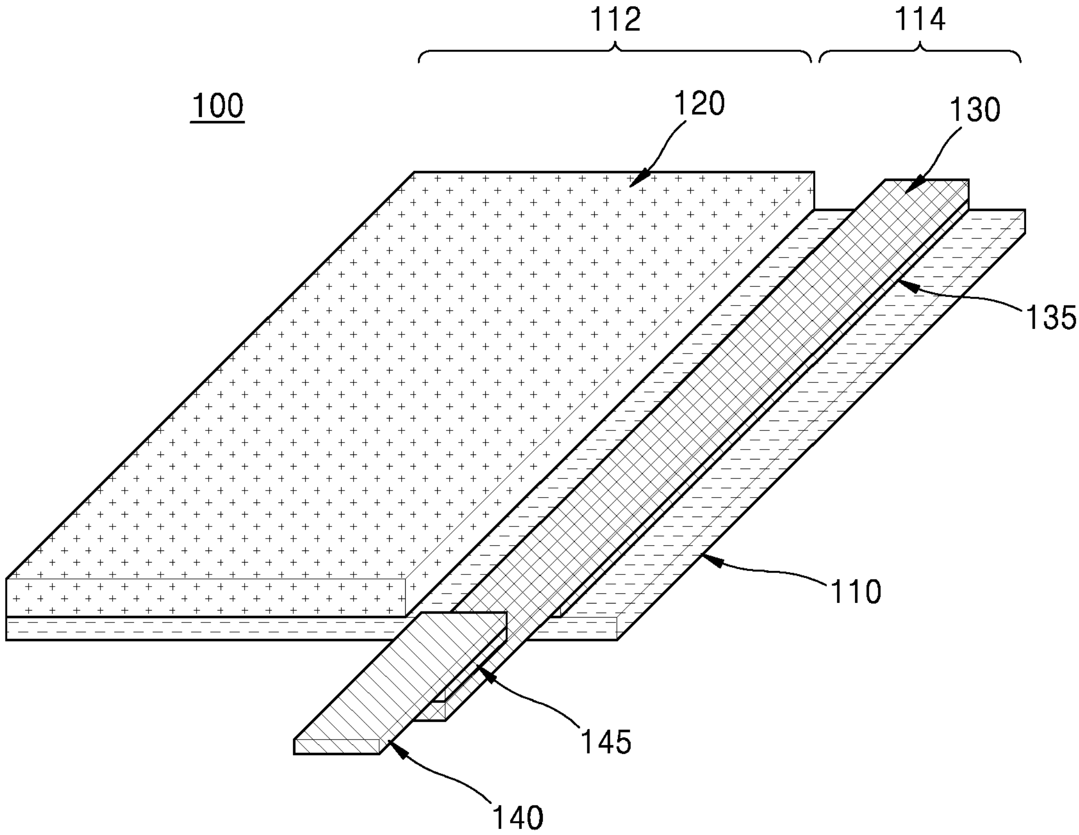

FIG. 2

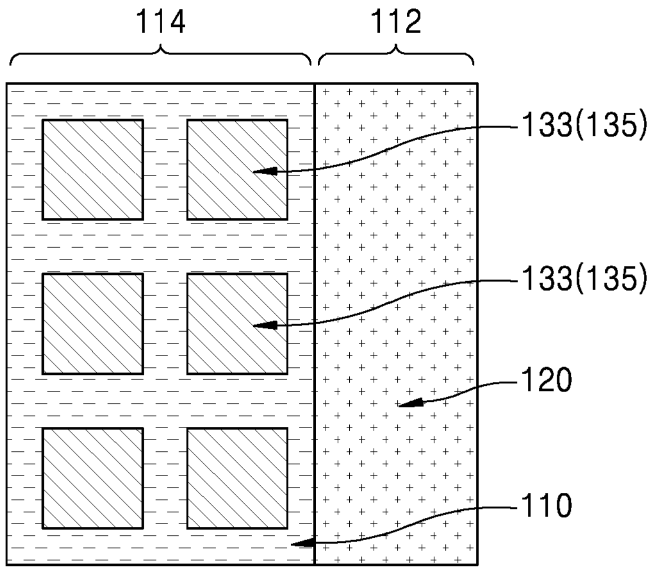

FIG. 3

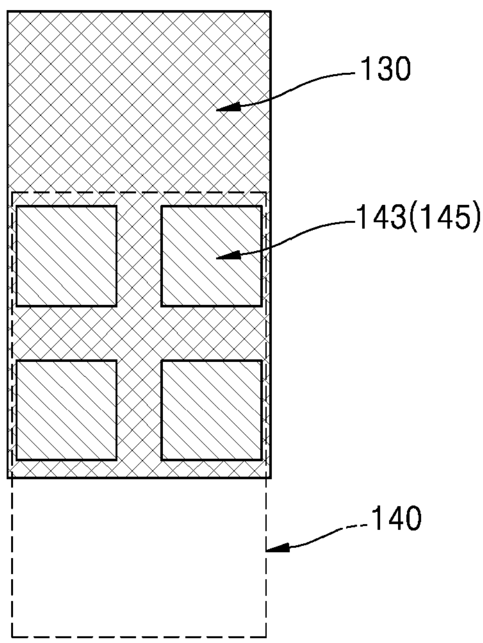

FIG. 4

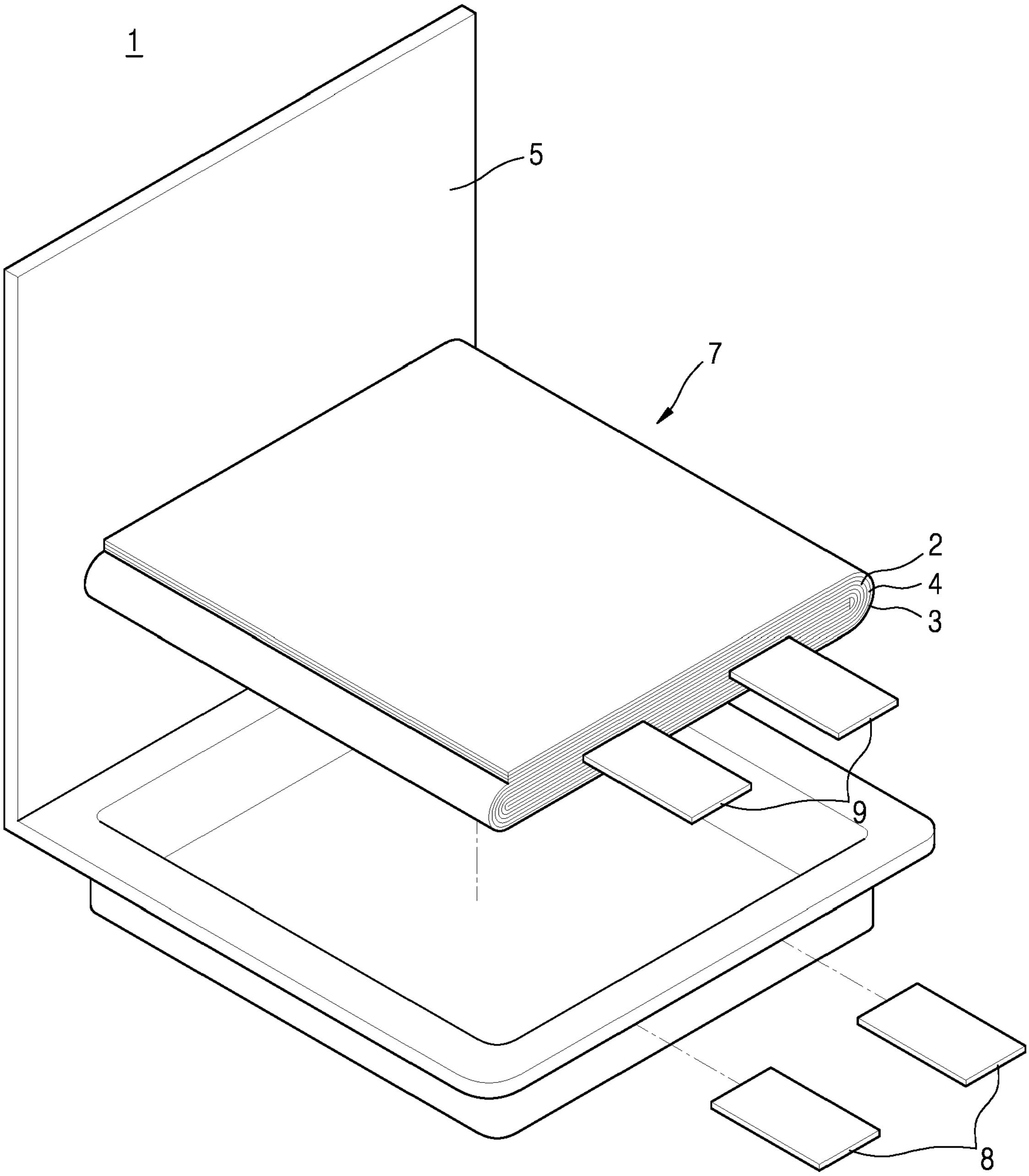

FIG. 5

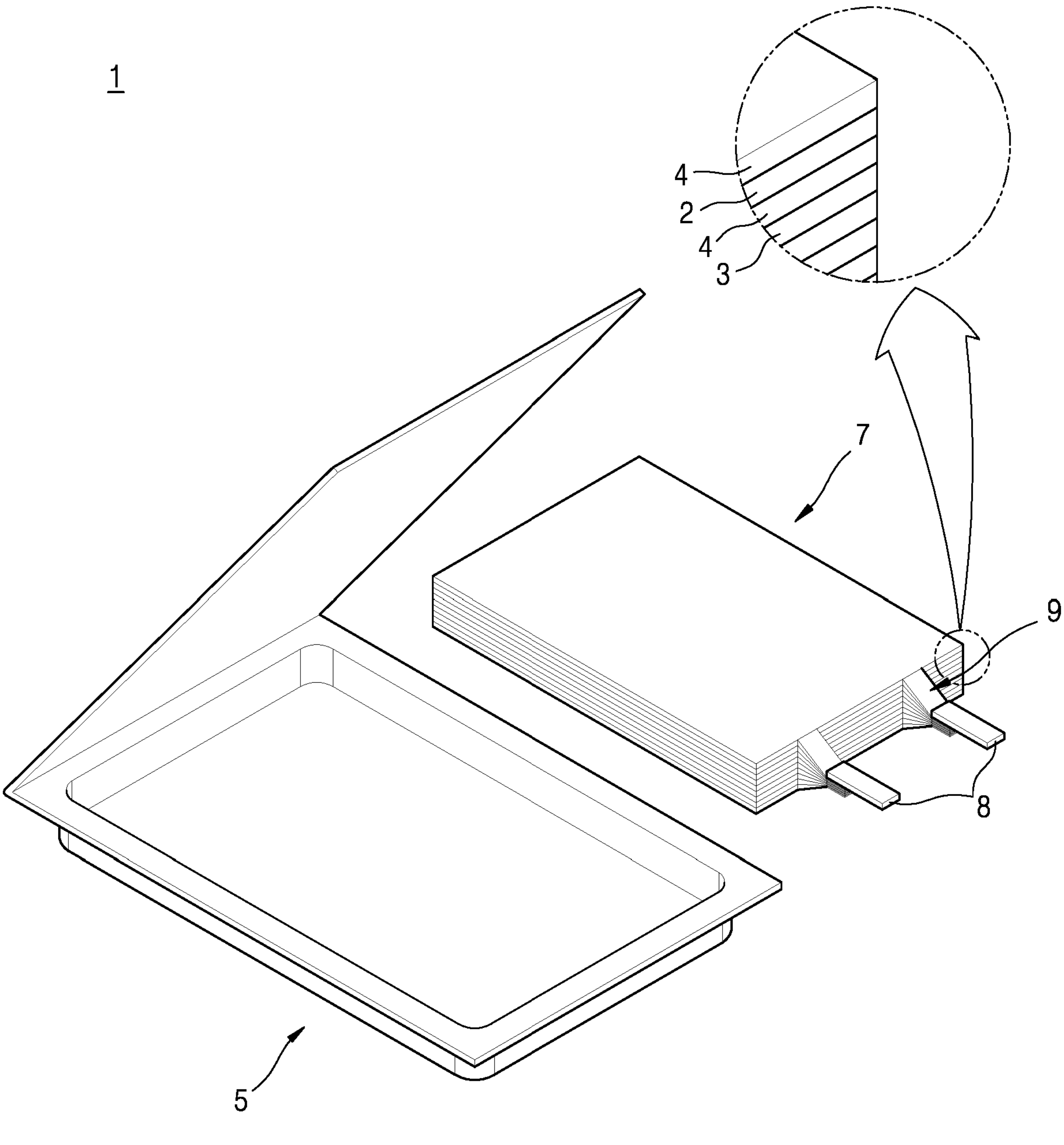

Europäisches Patentamt
European Patent Office
Office européen des brevets

# EUROPEAN SEARCH REPORT

Application Number
EP 24 16 6290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 276 715 A1 (NISSAN MOTOR [JP]) 31 January 2018 (2018-01-31) * paragraph [0044] * ----- | 1-15 | INV. H01M50/105 H01M50/533 H01M50/534 H01M50/536 |
| A | EP 2 903 064 A1 (ZEON CORP [JP]) 5 August 2015 (2015-08-05) * claims 1,3 * ----- | 1-15 | |
| X<br>A | US 2023/082574 A1 (KIM SANG HUN [KR] ET AL) 16 March 2023 (2023-03-16) * paragraph [0076]; claim 1; figure 4 * ----- | 1-4, 12-15<br>5-11 | |

| TECHNICAL FIELDS SEARCHED (IPC) |
|---|
| H01M<br>C08J<br>C09J |

The present search report has been drawn up for all claims

| Place of search | Date of completion of the search | Examiner |
|---|---|---|
| Munich | 3 September 2024 | Steinreiber, J |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 6290

This annex lists the patent family members relating to the patent documents cited in the above-mentioned European search report. The members are as contained in the European Patent Office EDP file on
The European Patent Office is in no way liable for these particulars which are merely given for the purpose of information.

03-09-2024

| Patent document cited in search report | Publication date | Patent family member(s) | Publication date |
|---|---|---|---|
| EP 3276715 A1 | 31-01-2018 | CN 107431210 A | 01-12-2017 |
| | | EP 3276715 A1 | 31-01-2018 |
| | | JP 6430875 B2 | 28-11-2018 |
| | | JP 2016186917 A | 27-10-2016 |
| | | KR 20170120668 A | 31-10-2017 |
| | | US 2018090766 A1 | 29-03-2018 |
| | | WO 2016158754 A1 | 06-10-2016 |
| EP 2903064 A1 | 05-08-2015 | CN 104521045 A | 15-04-2015 |
| | | EP 2903064 A1 | 05-08-2015 |
| | | JP 6152855 B2 | 28-06-2017 |
| | | JP WO2014051043 A1 | 22-08-2016 |
| | | KR 20150064008 A | 10-06-2015 |
| | | PL 2903064 T3 | 31-10-2017 |
| | | US 2015203722 A1 | 23-07-2015 |
| | | WO 2014051043 A1 | 03-04-2014 |
| US 2023082574 A1 | 16-03-2023 | CN 115088118 A | 20-09-2022 |
| | | EP 4092817 A1 | 23-11-2022 |
| | | JP 7463017 B2 | 08-04-2024 |
| | | JP 2023516182 A | 18-04-2023 |
| | | KR 20210125156 A | 18-10-2021 |
| | | US 2023082574 A1 | 16-03-2023 |
| | | WO 2021206306 A1 | 14-10-2021 |

EPO FORM P0459

For more details about this annex : see Official Journal of the European Patent Office, No. 12/82